# EUROPEAN PATENT APPLICATION

(11) **EP 4 346 266 A2**
(43) Date of publication of application: **03.04.2024**
(21) Application number: 23195630.1
(22) Date of filing: 06.09.2023
(51) Int. Cl.: H04W 24/02, H04W 48/16, H04W 76/15, H04W 84/12, H04W 84/18, H04W 88/06, H04W 88/10

(54) **MULTI- ACCESS POINT ASSOCIATION**

(30) Priority: 09.09.2022 US 202263405298 P; 22.08.2023 US 202318453831
(71) Applicant: Apple Inc., Cupertino, CA 95014 (US)
(72) Inventor: KNECKT, Jarkko L., Cupertino, CA, 95014 (US); JIANG, Jinjing, Cupertino, CA, 95014 (US); LIU, Yong, Cupertino, CA, 95014 (US); WU, Tianyu, Cupertino, CA, 95014 (US); VERMA, Lochan, Cupertino, CA, 95014 (US); YONG, Su Khiong, Cupertino, CA, 95014 (US); WANG, Qi, Cupertino, CA, 95014 (US); HEDAYAT, Ahmad Reza, Cupertino, CA, 95014 (US); THAKUR, Sidharth R., Cupertino, CA, 95014 (US)
(74) Representative: Lang, Johannes

(57) **Abstract**

This disclosure relates to methods for multi- access point association in a wireless local area network. Multiple access point wireless devices may establish a multi-access point system. Other access point wireless devices may subsequently join the multi-access point system. Non-access point wireless devices may form an association with the multi-access point system, which may include links with multiple different access point wireless devices in the multi-access point system.

## Description

### PRIORITY INFORMATION

This application claims priority to U.S. provisional patent application serial number 63/405,298, entitled "Multi- Access Point Association," filed September 9, 2022, which is hereby incorporated by reference in its entirety as though fully and completely set forth herein.

### TECHNICAL FIELD

The present application relates to wireless communication, including techniques and devices for multi- access point association in a wireless local area network architecture.

### DESCRIPTION OF THE RELATED ART

Wireless communication systems are rapidly growing in usage. Further, wireless communication technology has evolved from voice-only communications to also include the transmission of data, such as Internet and multimedia content.

Mobile electronic devices, or user equipment devices (UEs) may take the form of smart phones or tablets that a user typically carries. One aspect of wireless communication that may commonly be performed by UEs may include wireless networking, for example over a wireless local area network (WLAN), which may include devices that operate according to one or more communication standards in the IEEE 802.11 family of standards. UEs may be capable of transitioning between access points in such a system, but such transitions between access points in a WLAN setting can involve signaling overhead and data communication delays, as well as carry the possibility of failure or ping-ponging between access points, which could further disrupt data communication. Accordingly, improvements in the field are desired.

### SUMMARY

Embodiments are presented herein of, *inter alia,* systems, apparatuses, and methods for devices for multi- access point association in a wireless local area network architecture.

A wireless device may include one or more antennas, one or more radios operably coupled to the one or more antennas, and a processor operably coupled to the one or more radios. The wireless device may be configured to establish a connection with an access point through a wireless local area network (WLAN) over one or multiple wireless links, or may be an access point configured to establish a connection with one or more other wireless devices through a WLAN over one or multiple wireless links. The wireless device may operate in each of the multiple wireless links using a respective radio of the one or more radios.

According to the techniques described herein, access point wireless devices may perform discovery and join together to form a multi-access point system. Non-access point wireless devices that join the multi-access point system may be able to form concurrent associations with multiple access point wireless devices in the system, which may help reduce delays and overhead from transitions between access point wireless devices within the system, and/or may support improved reliability and performance in the system, at least according to some embodiments.

The techniques described herein may be implemented in and/or used with a number of different types of devices, including but not limited to cellular phones, tablet computers, accessory and/or wearable computing devices, portable media players, cellular base stations and other cellular network infrastructure equipment, servers, unmanned aerial vehicles, unmanned aerial controllers, automobiles and/or motorized vehicles, and any of various other computing devices.

This summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example wireless communication system including a user equipment device (UE), according to some embodiments;
Figure 2 is a block diagram illustrating an example UE, according to some embodiments;
Figure 3 is a block diagram illustrating an example network element or access point, according to some embodiments;
Figures 4-5 are flowchart diagrams illustrating example methods for supporting multi- access point (MAP) association in a wireless local area network, according to some embodiments;
Figure 6 is a flowchart diagram illustrating example signaling aspects of a possible fast BSS transition, according to some embodiments;
Figure 7 illustrates example aspects of a possible scenario in which a wireless device can associate with a multi-access point system, according to some embodiments;
Figure 8 illustrates aspects of an example extended service set and mobility domain deployment scenario, in which one or more MAP APs may be deployed, according to some embodiments;
Figure 9 is a table illustrating a comparison of various features of different Wi-Fi generations according to one possible evolution;
Figure 10 illustrates aspects of an example link switching scenario in a MAP system in a post-associated state, according to some embodiments;
Figure 11 illustrates aspects of an example link switching scenario in which multiple AP multi-link devices (MLDs) in an AP MAP are at coverage edge for a non-AP MAP, according to some embodiments;
Figure 12 is a table illustrating examples of possible link operation modes that could be used in a MAP system, according to some embodiments;
Figure 13 illustrates example aspects of a possible AP MAP architecture, according to some embodiments;
Figure 14 illustrates aspects of an example MAP system in which multiple downlink frame transmit buffering and uplink frame reorder buffering options could be implemented, according to some embodiments;
Figure 15 illustrates example aspects of a possible non-AP MAP architecture, according to some embodiments;
Figure 16 illustrates further example aspects of a possible MAP system architecture, according to some embodiments;
Figure 17 illustrates example aspects of an alternative system architecture with a mobility domain enhancement, according to some embodiments;
Figure 18 illustrates example aspects of a possible extended service set in which such a mobility domain enhancement is deployed, according to some embodiments;
Figures 19-20 illustrate example aspects of possible starting operation of a new AP MLD that joins an AP MAP, according to some embodiments;
Figure 21 illustrates example aspects of a possible easy mesh AP MAP network backbone deployment, according to some embodiments;
Figure 22 illustrates example aspects of a possible NAN topology that could be used in a MAP system, according to some embodiments;
Figure 23 is a signal flow diagram illustrating examples of possible AP MAP discovery and association features, according to some embodiments;
Figure 24 is an example signal flow diagram illustrating possible association process features for an AP MAP, according to some embodiments;
Figure 25 illustrates further exemplary aspects and features of a possible AP MLD transition within a multi-AP association, according to some embodiments;
Figure 26 illustrates an example of a possible signal flow for adding a link to a MAP association, according to some embodiments;
Figure 27 illustrates an example scenario showing various possible TID-to-link mapping features for MLD management, according to some embodiments;
Figure 28 is a table illustrating examples of possible features for TID-to-link mapping in a MAP association, according to some embodiments;
Figure 29 illustrates aspects of an example scenario in which a roaming TID mapping mode could be used, according to some embodiments;
Figures 30-31 illustrate further examples of possible features for AP MAP implementation of the roaming mode, according to some embodiments;
Figure 32 illustrates example aspects of a possible multi-AP operating mode, according to some embodiments;
Figure 33 illustrates example aspects of possible power management use in conjunction with a MAP association, according to some embodiments;
Figure 34 illustrates example aspects of a possible 2-level address hierarchy framework for non-AP STAs in MAP system, according to some embodiments;
Figure 35 illustrates example aspects of a possible fast transition key hierarchy that could be used in a MAP system, according to some embodiments;
Figure 36 illustrates example aspects of a possible MAP system that includes multiple locations in which transmit buffer and reorder buffer implementation can occur, according to some embodiments;
Figures 37-38 illustrate further details of possible example scenarios in which transmit buffer and reorder buffer implementation can be implemented in multiple locations, according to some embodiments;
Figure 39 illustrates example aspects of a possible data encryption and decryption architecture in a MAP system, according to some embodiments;
Figure 40 is a table illustrating examples of possible data transmission flow features in an AP MAP and possible implementation locations for those features, according to some embodiments;
Figure 41 illustrates example aspects of possible frame encryption and decryption alternatives in an AP MAP, according to some embodiments;
Figure 42 is a table illustrating examples of possible sequence number handling rules for such various SN spaces in a MAP system, according to some embodiments;
Figure 43 illustrates example aspects of possible EMLSR operation in MAP association, according to some embodiments;
Figure 44 illustrates examples of possible features of a multi-AP element that could be used to provide information about a MAP system, according to some embodiments;
Figure 45 illustrates example aspects of a possible MAP probe request and probe response use case, according to some embodiments;
Figure 46 is a signal flow diagram illustrating an example of such a possible MAP probe request and probe response signal flow, according to some embodiments;
Figure 47 is a table illustrating examples of possible variations on information that can be requested/included in probe requests/responses, according to some embodiments;
Figure 48 is a table illustrating examples of aspects of possible AP MAP signaling in a reduced neighbor report (RNR), according to some embodiments; and
Figures 49-50 illustrate aspects of a possible example RNR format option that could be used in an AP MAP, according to some embodiments

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Terminology

The following are definitions of terms used in this disclosure:

**Memory Medium** - Any of various types of non-transitory memory devices or storage devices. The term "memory medium" is intended to include an installation medium, e.g., a CD-ROM, floppy disks, or tape device; a computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium may include other types of non-transitory memory as well or combinations thereof. In addition, the memory medium may be located in a first computer system in which the programs are executed, or may be located in a second different computer system which connects to the first computer system over a network, such as the Internet. In the latter instance, the second computer system may provide program instructions to the first computer for execution. The term "memory medium" may include two or more memory mediums which may reside in different locations, e.g., in different computer systems that are connected over a network. The memory medium may store program instructions (e.g., embodied as computer programs) that may be executed by one or more processors.

**Carrier Medium** - a memory medium as described above, as well as a physical transmission medium, such as a bus, network, and/or other physical transmission medium that conveys signals such as electrical, electromagnetic, or digital signals.

**Programmable Hardware Element** - includes various hardware devices comprising multiple programmable function blocks connected via a programmable interconnect. Examples include FPGAs (Field Programmable Gate Arrays), PLDs (Programmable Logic Devices), FPOAs (Field Programmable Object Arrays), and CPLDs (Complex PLDs). The programmable function blocks may range from fine grained (combinatorial logic or look up tables) to coarse grained (arithmetic logic units or processor cores). A programmable hardware element may also be referred to as "reconfigurable logic".

**Computer System** - any of various types of computing or processing systems, including a personal computer system (PC), mainframe computer system, workstation, network appliance, Internet appliance, personal digital assistant (PDA), television system, grid computing system, or other device or combinations of devices. In general, the term "computer system" can be broadly defined to encompass any device (or combination of devices) having at least one processor that executes instructions from a memory medium.

**User Equipment (UE) (or "UE Device")** - any of various types of computer systems or devices that are mobile or portable and that perform wireless communications. Examples of UE devices include mobile telephones or smart phones (e.g., iPhone^{™}, Android^{™}-based phones), portable gaming devices (e.g., Nintendo DS^{™}, PlayStation Portable^{™}, Gameboy Advance^{™}, iPhone^{™}), laptops, wearable devices (e.g. smart watch, smart glasses), PDAs, portable Internet devices, music players, data storage devices, or other handheld devices, automobiles and/or motor vehicles, unmanned aerial vehicles (UAVs) (e.g., drones), UAV controllers (UACs), etc. In general, the term "UE" or "UE device" can be broadly defined to encompass any electronic, computing, and/or telecommunications device (or combination of devices) which is easily transported by a user and capable of wireless communication.

**Wireless Device or Station (STA)** - any of various types of computer systems or devices that perform wireless communications. A wireless device can be portable (or mobile) or may be stationary or fixed at a certain location. The terms "station" and "STA" are used similarly. A UE is an example of a wireless device.

**Communication Device** - any of various types of computer systems or devices that perform communications, where the communications can be wired or wireless. A communication device can be portable (or mobile) or may be stationary or fixed at a certain location. A wireless device is an example of a communication device. A UE is another example of a communication device.

**Base Station or Access Point (AP)** - The term "Base Station" (also called "eNB") has the full breadth of its ordinary meaning, and at least includes a wireless communication station installed at a fixed location and used to communicate as part of a wireless communication system. The term "access point" (or "AP") is used similarly.

**Processing Element (or Processor)** - refers to various elements or combinations of elements that are capable of performing a function in a device, e.g., in a user equipment device or in a network infrastructure device. Processors may include, for example: processors and associated memory, circuits such as an ASIC (Application Specific Integrated Circuit), portions or circuits of individual processor cores, entire processor cores, processor arrays, programmable hardware devices such as a field programmable gate array (FPGA), and/or larger portions of systems that include multiple processors, as well any of various combinations of the above.

**Automatically** - refers to an action or operation performed by a computer system (e.g., software executed by the computer system) or device (e.g., circuitry, programmable hardware elements, ASICs, etc.), without user input directly specifying or performing the action or operation. Thus, the term "automatically" is in contrast to an operation being manually performed or specified by the user, where the user provides input to directly perform the operation. An automatic procedure may be initiated by input provided by the user, but the subsequent actions that are performed "automatically" are not specified by the user, i.e., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form may be automatically filled out by the computer system where the computer system (e.g., software executing on the computer system) analyzes the fields of the form and fills in the form without any user input specifying the answers to the fields. As indicated above, the user may invoke the automatic filling of the form, but is not involved in the actual filling of the form (e.g., the user is not manually specifying answers to fields but rather they are being automatically completed). The present specification provides various examples of operations being automatically performed in response to actions the user has taken.

**IEEE 802.11** - refers to technology based on IEEE 802.11 wireless standards such as 802.11a, 802.11.b, 802.11g, 802.11n, 802.11-2012, 802.11ac, 802.11ad, 802.11ax, 802.11ay, 802.11be, and/or other IEEE 802.11 standards. IEEE 802.11 technology may also be referred to as "Wi-Fi" or "wireless local area network (WLAN)" technology.

**Configured to** - Various components may be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors may be configured to electrically connect a module to another module, even when the two modules are not connected). In some contexts, "configured to" may be a broad recitation of structure generally meaning "having circuitry that" performs the task or tasks during operation. As such, the component can be configured to perform the task even when the component is not currently on. In general, the circuitry that forms the structure corresponding to "configured to" may include hardware circuits.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112, paragraph six, interpretation for that component.

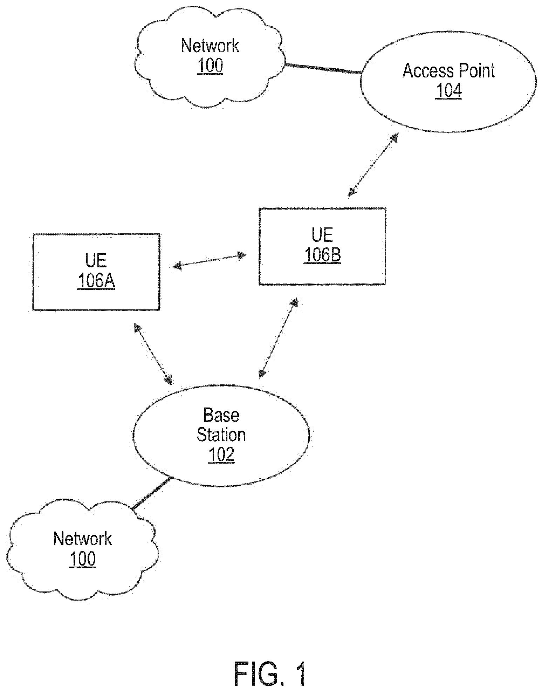

### Figures 1-2 - Wireless Communication System

Figure 1 illustrates an example of a wireless communication system. It is noted that Figure 1 represents one possibility among many, and that features of the present disclosure may be implemented in any of various systems, as desired. For example, embodiments described herein may be implemented in any type of wireless device. The wireless embodiment described below is one example embodiment.

As shown, the exemplary wireless communication system includes a cellular base station 102, which communicates over a transmission medium with one or more wireless devices 106A, 106B, etc. Wireless devices 106A and 106B may be user devices, which may be referred to herein as "user equipment" (UE), UEs, or UE devices.

The UE 106 maybe a device with wireless network connectivity such as a mobile phone, a hand-held device, a wearable device, a computer or a tablet, an unmanned aerial vehicle (UAV), an unmanned aerial controller (UAC), an automobile, or virtually any type of wireless device. The UE 106 may include a processor (processing element) that is configured to execute program instructions stored in memory. The UE 106 may perform any of the method embodiments described herein by executing such stored instructions. Alternatively, or in addition, the UE 106 may include a programmable hardware element such as an FPGA (field-programmable gate array), an integrated circuit, and/or any of various other possible hardware components that are configured to perform (e.g., individually or in combination) any of the method embodiments described herein, or any portion of any of the method embodiments described herein.

The base station 102 may be a base transceiver station (BTS) or cell site, and may include hardware that enables wireless communication with the UE devices 106A and 106B. The base station 102 may also be equipped to communicate with a network 100 (e.g., a core network of a cellular service provider, a telecommunication network such as a public switched telephone network (PSTN), and/or the Internet, among various possibilities). Thus, the base station 102 may facilitate communication among the UE devices 106 and/or between the UE devices 106 and the network 100. In other implementations, base station 102 can be configured to provide communications over one or more other wireless technologies, such as an access point supporting one or more WLAN protocols, such as 802.11 a, b, g, n, ac, ad, ax, ay, be and/or other 802.11 versions, or LTE in an unlicensed band (LAA).

The communication area (or coverage area) of the base station 102 may be referred to as a "cell." The base station 102 and the UEs 106 may be configured to communicate over the transmission medium using any of various radio access technologies (RATs) or wireless communication technologies, such as LTE, LTE-Advanced (LTE-A), 5G NR, Wi-Fi, ultra-wideband (UWB), etc.

Base station 102 and other similar base stations (not shown) operating according to one or more cellular communication technologies may thus be provided as a network of cells, which may provide continuous or nearly continuous overlapping service to UE devices 106A-B and similar devices over a geographic area via one or more cellular communication technologies.

Note that at least in some instances a UE device 106 may be capable of communicating using any of multiple wireless communication technologies. For example, a UE device 106 might be configured to communicate using one or more of LTE, LTE-A, 5G NR, WLAN, Bluetooth, UWB, one or more global navigational satellite systems (GNSS, e.g., GPS or GLONASS), one and/or more mobile television broadcasting standards (e.g., ATSC-M/H), etc. Other combinations of wireless communication technologies (including more than two wireless communication technologies) are also possible. Likewise, in some instances a UE device 106 may be configured to communicate using only a single wireless communication technology.

As shown, the exemplary wireless communication system also includes a WLAN access point (AP) 104, which communicates over a transmission medium with the wireless device 106B. The WLAN access point, which may be a Wi-Fi AP, also provides communicative connectivity to the network 100. Thus, according to some embodiments, wireless devices may be able to connect to either or both of the base station 102 (or another cellular base station) and the access point 104 (or another access point) to access the network 100 at a given time.

The UEs 106A and 106B may include handheld devices such as smart phones or tablets, wearable devices such as smart watches or smart glasses, and/or may include any of various types of devices with cellular communications capability. For example, one or more of the UEs 106A and 106B maybe a wireless device intended for stationary or nomadic deployment such as an appliance, measurement device, control device, etc.

The UE 106B may also be configured to communicate with the UE 106A. For example, the UE 106A and UE 106B may be capable of performing direct device-to-device (D2D) communication. The D2D communication maybe supported by the cellular base station 102 (e.g., the BS 102 may facilitate discovery, among various possible forms of assistance), or may be performed in a manner unsupported by the BS 102.

The UE 106 may include one or more devices or integrated circuits for facilitating wireless communication, potentially including a cellular modem and/or one or more other wireless modems. The wireless modem(s) may include one or more processors (processor elements) and various hardware components as described herein. The UE 106 may perform any of the method embodiments described herein by executing instructions on one or more programmable processors. Alternatively, or in addition, the one or more processors may be one or more programmable hardware elements such as an FPGA (field-programmable gate array), application-specific integrated circuit (ASIC), or other circuitry, that is configured to perform any of the method embodiments described herein, or any portion of any of the method embodiments described herein. The wireless modem(s) described herein may be used in a UE device as defined herein, a wireless device as defined herein, or a communication device as defined herein. The wireless modem described herein may also be used in a base station or other similar network side device.

The UE 106 may include one or more antennas for communicating using two or more wireless communication protocols or radio access technologies. In some embodiments, the UE device 106 might be configured to communicate using a single shared radio. The shared radio may couple to a single antenna, or may couple to multiple antennas (e.g., for MIMO) for performing wireless communications. Alternatively, the UE device 106 may include two or more radios, each of which may be configured to communicate via a respective wireless link. Other configurations are also possible.

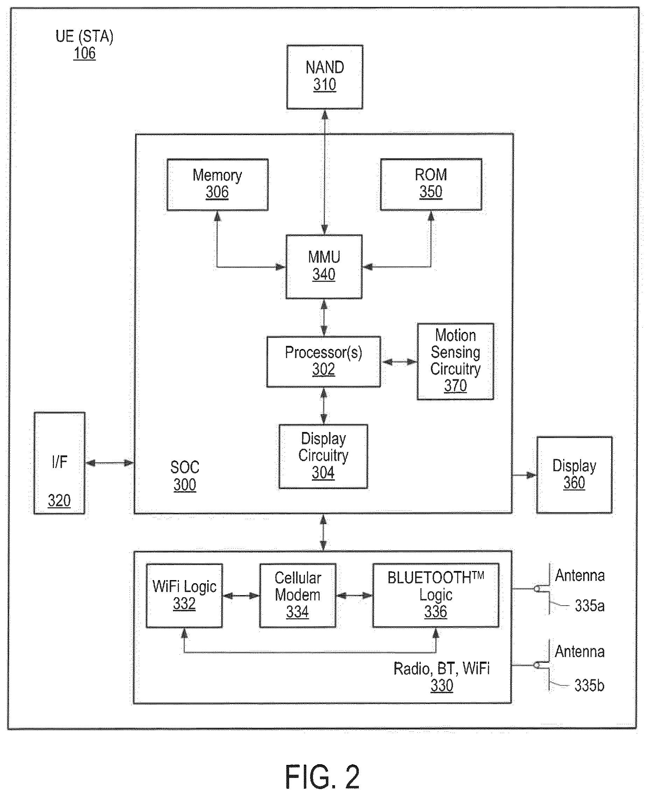

### Figure 2 - Example Block Diagram of a UE Device

Figure 2 illustrates one possible block diagram of a UE device, such as UE device 106. In some instances (e.g., in an 802.11 communication context), the UE 106 may alternatively be referred to as a station (STA) 106, and possibly more particularly as a non-AP STA 106. As shown, the UE device 106 may include a system on chip (SOC) 300, which may include portions for various purposes. For example, as shown, the SOC 300 may include processor(s) 302 which may execute program instructions for the UE device 106, and display circuitry 304 which may perform graphics processing and provide display signals to the display 360. The SOC 300 may also include motion sensing circuitry 370 which may detect motion of the UE 106, for example using a gyroscope, accelerometer, and/or any of various other motion sensing components. The processor(s) 302 may also be coupled to memory management unit (MMU) 340, which may be configured to receive addresses from the processor(s) 302 and translate those addresses to locations in memory (e.g., memory 306, read only memory (ROM) 350, flash memory 310). The MMU 340 may be configured to perform memory protection and page table translation or set up. In some embodiments, the MMU 340 may be included as a portion of the processor(s) 302.

As shown, the SOC 300 may be coupled to various other circuits of the UE 106. For example, the UE 106 may include various types of memory (e.g., including NAND flash 310), a connector interface 320 (e.g., for coupling to a computer system, dock, charging station, etc.), the display 360, and wireless communication circuitry 330 (e.g., for LTE, LTE-A, 5G NR, Bluetooth, Wi-Fi, NFC, GPS, UWB, etc.).

The UE device 106 may include at least one antenna, and in some embodiments multiple antennas 335a and 335b, for performing wireless communication with base stations and/or other devices. For example, the UE device 106 may use antennas 335a and 335b to perform the wireless communication. As noted above, the UE device 106 may in some embodiments be configured to communicate wirelessly using a plurality of wireless communication standards or radio access technologies (RATs).

The wireless communication circuitry 330 may include Wi-Fi Logic 332, a Cellular Modem 334, and Bluetooth Logic 336. The Wi-Fi Logic 332 is for enabling the UE device 106 to perform Wi-Fi or other WLAN communications on an 802.11 network. The Bluetooth Logic 336 is for enabling the UE device 106 to perform Bluetooth communications. The cellular modem 334 may be a cellular modem capable of performing cellular communication according to one or more cellular communication technologies.

As described herein, UE 106 may include hardware and software components for implementing embodiments of this disclosure. For example, one or more components of the wireless communication circuitry 330 (e.g., Wi-Fi logic 332, cellular modem 334, BT logic 336) of the UE device 106 may be configured to implement part or all of the methods described herein, e.g., by a processor executing program instructions stored on a memory medium (e.g., a non-transitory computer-readable memory medium), a processor configured as an FPGA (Field Programmable Gate Array), and/or using dedicated hardware components, which may include an ASIC (Application Specific Integrated Circuit).

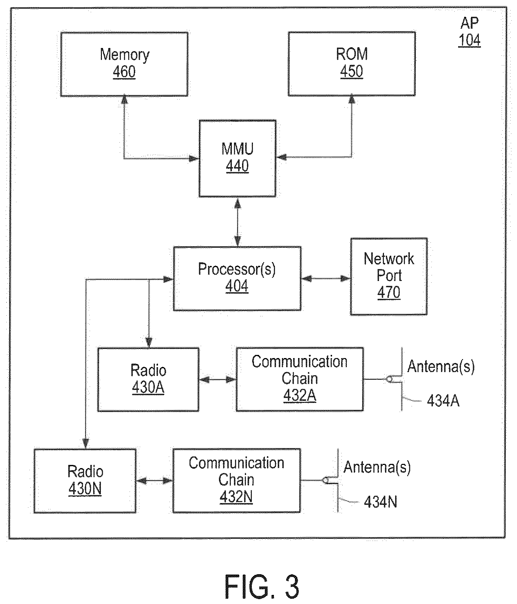

### Figure 3 - Block Diagram of an Access Point

Figure 3 illustrates an example block diagram of an access point (AP) 104, according to some embodiments. In some instances (e.g., in an 802.11 communication context), the AP 104 may also be referred to as a station (STA), and possibly more particularly as an AP STA. It is noted that the AP of Figure 3 is merely one example of a possible access point. As shown, AP 104 may include processor(s) 404 which may execute program instructions for the AP 104. The processor(s) 404 may also be coupled to memory management unit (MMU) 440, which may be configured to receive addresses from the processor(s) 404 and translate those addresses to locations in memory (e.g., memory 460 and read only memory (ROM) 450) or to other circuits or devices.

The AP 104 may include at least one network port 470. The network port 470 may be configured to couple to a telephone network and provide a plurality of devices, such as UE devices 106, access to the telephone network as described above in Figure 1.

The network port 470 (or an additional network port) may also or alternatively be configured to couple to a cellular network, e.g., a core network of a cellular service provider. The core network may provide mobility related services and/or other services to a plurality of devices, such as UE devices 106. In some cases, the network port 470 may couple to a telephone network via the core network, and/or the core network may provide a telephone network (e.g., among other UE devices serviced by the cellular service provider).

The AP 104 may include one or more radios 430A-430N, each of which may be coupled to a respective communication chain and at least one antenna 434, and possibly multiple antennas. The antenna(s) 434 may be configured to operate as a wireless transceiver and may be further configured to communicate with UE devices 106/107 via radio 430. The antenna(s) 434A-N communicate with their respective radios 430A-N via communication chains 432A-N. Communication chains 432 may be receive chains, transmit chains, or both. The radios 430A-N may be configured to communicate via various wireless communication standards, including, but not limited to, LTE, LTE-A, 5G NR, UWB, Wi-Fi, etc. The UE 104 may be configured to operate in multiple wireless links using the one or more radios 430A-N, wherein each radio is used to operate in a respective wireless link.

The AP 104 may be configured to communicate wirelessly using multiple wireless communication standards. In some instances, the AP 104 may include multiple radios, which may enable the network entity to communicate according to multiple wireless communication technologies. For example, as one possibility, the AP 104 may include an LTE or 5G NR radio for performing communication according to LTE as well as a Wi-Fi radio for performing communication according to Wi-Fi. In such a case, the AP 104 may be capable of operating as both an LTE base station and a Wi-Fi access point. As another possibility, the AP 104 may include a multi-mode radio which is capable of performing communications according to any of multiple wireless communication technologies (e.g., 5G NR and Wi-Fi, 5G NR and LTE, etc.). As still another possibility, the AP 104 may be configured to act exclusively as a Wi-Fi access point, e.g., without cellular communication capability.

As described further subsequently herein, the AP 104 may include hardware and software components for implementing or supporting implementation of features described herein. The processor 404 of the access point 104 may be configured to implement or support implementation of part or all of the methods described herein, e.g., by executing program instructions stored on a memory medium (e.g., a non-transitory computer-readable memory medium) to operate multiple wireless links using multiple respective radios. Alternatively, the processor 404 may be configured as a programmable hardware element, such as an FPGA (Field Programmable Gate Array), or as an ASIC (Application Specific Integrated Circuit), or a combination thereof. Alternatively (or in addition) the processor 404 of the AP 104, in conjunction with one or more of the other components 430, 432, 434, 440, 450, 460, 470 maybe configured to implement or support implementation of part or all of the features described herein.

### Multi-Link Communication and Multi-AP association over WLAN

Wireless local area networks (WLANs) may utilize multiple links during communications between a wireless station (STA), such as a UE 106 as illustrated in Figure 2, and a wireless access point (AP) such as the AP 104 illustrated in Figure 3, in either or both of uplink and downlink communications. The STA may be any of a variety of types of wireless stations, including but not limited to a UE 106, a smart phone, tablet, personal computer, smart watch, accessory device, an unmanned aerial vehicle (UAV), an unmanned aerial controller (UAC), an automobile, or any other type of wireless device capable of communicating over a WLAN.

While the 802.11ax standard allows a STA and an AP to communicate according to either a 5 GHz link or a 2.4 GHz link, for example, 802.11be may allow a STA and an AP to communicate over multiple links simultaneously, potentially including 2.4 GHz, 5 GHz, and/or 6 GHz links, which may improve throughput and reduce communication latency, at least in some instances. For example, a single connection between a STA and an AP may utilize multiple wireless links, each of which operates within the same or a different frequency band.

Operating in multiple links may shorten transmission delays, as the associated AP and the STA simultaneously communicate on multiple links and transmissions may be performed over the first available link (e.g., rather than having to wait for a particular link to become available, which may be temporarily congested or otherwise unavailable). Accordingly, a single congested link may be prevented from severely increasing transmission delays, and the duration of transmission delays may be shortened. Additionally, multiple link operation introduces power consumption considerations, as STA power consumption may vary depending on the number of spatial streams and the size of the operating bandwidth. Depending on the STA configuration, operation over multiple links may consume more power than operation over a single link.

Such a concept may be expanded to include the possibility for a STA to establish simultaneous wireless links with multiple APs. Supporting multi-AP association may have the further potential benefit of reducing the number of basic service set (BSS) transitions, which may avoid at least some communication overhead and delays. In some instances, such a feature may potentially result in reduced BSS transition failure instances and lower likelihood of ping-ponging between different APs, e.g., in scenarios when link performance for one or more available APs is experiencing significant variability over time. Embodiments described herein include devices and mechanisms to support multi-AP association.

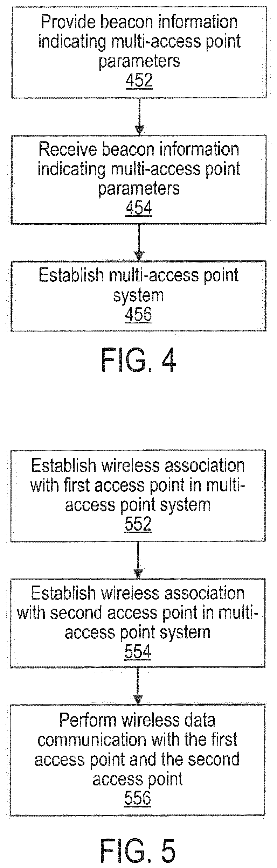

### Figures 4-5 - Flowcharts

Figures 4-5 are flowchart diagram illustrating methods for supporting a multi-access point (AP) system between one or more wireless stations (STAs) such as a UE 106 and multiple wireless APs such as the AP 104 using a WLAN, according to some embodiments. In various embodiments, some of the elements of the methods shown may be performed concurrently, in a different order than shown, may be substituted for by other method elements, or may be omitted. Additional method elements may also be performed as desired.

Aspects of the methods of Figures 4-5 may be implemented by a wireless device, such as the AP 104 or UE 106 illustrated in and described with respect to Figures 1-3, or more generally in conjunction with any of the computer circuitry, systems, devices, elements, or components shown in the Figures, among others, as desired. For example, a processor (and/or other hardware) of such a device may be configured to cause the device to perform any combination of the illustrated method elements and/or other method elements.

Note that while at least some elements of the methods of Figures 4-5 are described in a manner relating to the use of communication techniques and/or features associated with IEEE 802.11 specification documents, such description is not intended to be limiting to the disclosure, and aspects of the methods of Figures 4-5 may be used in any suitable wireless communication system, as desired. As shown, the methods may operate as follows.

One aspect of the methods may include mutual AP discovery and formation of a multi-AP system. As part of such discovery, a first access point (AP) wireless device may provide beacon information (e.g., via wireless transmission) indicating multi-AP parameters for the first AP wireless device (452). Note that the beacon information for the first AP wireless device may also include AP parameters for the first AP wireless device and/or any of various other types of information, according to various embodiments.

The first AP wireless device may receive beacon information (e.g., via wireless transmission) from a second AP wireless device, which may indicate multi-AP parameters for the second AP wireless device (454). Note that, similar to the beacon information for the first AP wireless device, the beacon information for the second AP wireless device may also include AP parameters for the second wireless device and/or any of various other types of information, according to various embodiments.

The first AP wireless device and the second AP wireless device may establish a multi-AP system with at least the first AP wireless device and the second AP wireless device (456). The multi-AP system may be established based at least in part on the multi-AP parameters exchanged in the beacon transmission for the first AP wireless device and the second AP wireless device. For example, the first AP wireless device and the second AP wireless device may perform handshake signaling to negotiate or agree on the multi-AP parameters for the multi-AP system. The handshake signaling could, for example, include exchanging a multi-AP creation request and multi-AP creation response. The multi-AP system establishment may also include mutual authentication and establishment of a pairwise master key (PMK), and/or provision of information indicating APs and/or AP multi-link devices (and their parameters) in the multi-AP system being established.

Once the multi-AP system is established, other AP wireless devices may also perform discovery to determine that the multi-AP system exists, and may potentially join the multi-AP system. For example, the discovery may include receiving beacon information provided by one or more AP wireless devices affiliated with the multi-AP system, which may include multi-AP system parameter information. An AP wireless device may be able to transmit a request to join the multi-AP system (e.g., to an AP wireless device from which it received a beacon frame including the multi-AP system parameter information), and in turn receive a response accepting the request to join the multi-AP system. The joining signaling to become affiliated with the multi-AP system could include authentication, key setup, and/or capabilities signaling, among various possibilities.

It may be the case that multi-AP system parameters can be updated after the multi-AP system is initially established. This could include updating the list of APs and AP multi-link devices affiliated with the multi-AP system based on an AP or AP multi-link device joining the multi-AP system, as one possibility. Additionally, or alternatively, any of various other multi-AP parameters could be modified, e.g., in various circumstances. In such cases, updated multi-AP parameters may be provided to AP wireless devices affiliated with the multi-AP system. Those AP wireless devices may subsequently provide the updated multi-AP parameters (e.g., including a different list of AP and/or AP multi-link devices affiliated with the multi-AP system and/or other different multi-AP parameters) in beacon information transmitted in beacon frames, and/or in other transmissions (e.g., probe response frames, multi-link probe response frames, reduced neighbor report frames, etc.) performed by the AP wireless devices in the multi-AP system.

Non-AP wireless devices may establish wireless associations with AP wireless devices in such a multi-AP system. For example, a non-AP wireless device may establish a first wireless association with a first AP wireless device in a multi-AP system (552). The non-AP wireless device may also establish a second wireless association with a second AP wireless device in the multi-AP system (554). The wireless associations with the different AP devices in the multi-AP system may be concurrently active; in other words, the non-AP wireless device may not need to release an association with one AP wireless device in the multi-AP system to establish an association with another AP wireless device in the multi-AP system, at least according to some embodiments. The non-AP wireless device may be able to perform wireless data communication with both of the first AP wireless device and the second AP wireless device.

The wireless communication may include IEEE 802.11 based wireless communication, at least according to some embodiments. Beacon frames and/or wireless links established between devices in the multi-AP system may operate in one or more separate frequency bands (e.g., a 2.4 GHz link, a 5 GHz link, a 6GHz link, and/or other wireless links).

Each wireless device operating in the multi-AP system may be assigned a multi-AP address for use by the wireless device in the multi-AP system. Thus, the first AP wireless device, the second AP wireless device, any other AP wireless devices, and any non-AP wireless devices in the system may each determine their individual multi-AP address to use for identification within the multi-AP system. Such address may be distinct from multi-link device (MLD) level addresses and/or STA level addresses, at least according to some embodiments.

AP wireless devices in the multi-AP system may provide multi-AP system information for the multi-AP system to non-AP wireless devices in (or that might potentially join) the multi-AP system. Various types and amounts of multi-AP system information may be provided in any or all of one or more beacon frames, probe response frames, multi-link probe response frames, and/or reduced neighbor report frames. For example, the multi-AP system information could include information indicating all APs in the multi-AP system. Alternatively, the multi-AP system information could include information indicating a subset of the APs in the multi-AP system. For example, an AP wireless device in a multi-AP system could receive a probe request from a non-AP wireless device, and depending on the specificity of the probe request, the AP wireless device could respond with AP information for a corresponding specific subset of the APs in the multi-AP system, which could include information at any or all of AP, AP multi-link device, or multi-AP system level.

It may be possible for traffic identifier (TID) to link mapping for a non-AP wireless device in the multi-AP system to be performed in any of a variety of ways, according to various embodiments. At least in some instances, it may be possible that some or all TIDs could be limited to links between a non-AP wireless device and a single AP wireless device in the multi-AP system (e.g., one AP per TID at most). Alternatively, it may be possible that some or all TIDs could be assigned to multiple links spanning associations between a non-AP wireless device and multiple AP wireless devices in the multi-AP system. Other approaches or operating modes are also possible.

In some embodiments, an AP wireless device (e.g., the first AP wireless device, the second AP wireless device, or another AP wireless device) or another wireless device (e.g., a dedicated network controller device) may operate as a network controller for the multi-AP system. The network controller may store various bookkeeping information for the various multi-AP associations in the multi-AP system, at least according to some embodiments. For example, for each association in the multi-AP system, the network controller may store any or all of station (STA) and AP parameters for each link for the association, non-AP multi-link device and AP multi-link device parameters for each multi-link device for the association, and/or non-AP multi-access point parameters and AP multi-access point parameters for the association.

In some instances, the network controller may additionally or alternatively have a role in performing non-AP association with the multi-AP system. For example, when an association request is received from a non-AP wireless device by an AP wireless device in the multi-AP system, it may be the case that the request is forwarded to the network controller. The network controller may send queries to one or more APs and/or AP multi-link devices in the multi-AP system to determine which links are available (e.g., setup). The network controller may also decide whether the link(s) requested in the association request are created with the affiliated APs (potentially including combining responses from APs / AP multi-link devices in the system and/or further reducing links or rejecting the association altogether), and may create an association response that is sent to the non-AP wireless device (e.g., by way of the AP wireless device that received the association request from the non-AP wireless device).

In some instances, either or both of downlink data buffering and/or uplink data buffering and reordering for non-AP wireless device data communications in the multi-AP system may be performed by the network controller. Thus, as one possibility, downlink data for non-AP wireless devices in the multi-AP system may be buffered until the downlink data is requested (e.g., to be transmitted to the associated non-AP wireless device) by an AP wireless device in the multi-AP system. As another possibility, uplink data for non-AP wireless devices in the multi-AP system may be received from AP wireless devices in the multi-AP system, and the network controller may buffer and perform uplink data reordering for the uplink data for the non-AP wireless devices in the multi-AP system, e.g., before providing the data onwards (e.g., to the Internet or otherwise to higher layers for handling). Alternatively, it may be the case that either or both of downlink data buffering and/or uplink data buffering and reordering for a non-AP wireless device are performed at the AP wireless device currently serving the non-AP wireless device in the multi-AP system.

Similarly, one or more of downlink frame encryption or uplink frame decryption for non-AP wireless devices in the multi-AP system may be performed by the network controller, in some embodiments. For example, in some instances, it may be the case that the encryption block is located with the device that operates the transmission buffer and the decryption block is located with the device that operates the reordering buffer.

In some instances, a non-AP wireless device maybe able to establish wireless associations with multiple AP wireless devices in the multi-AP system via control signaling with a single AP wireless device in the multi-AP system. For example, the first wireless association and the second wireless association could be established via control signaling with the first AP device, as one possibility. Note that, according to various embodiments, it may be possible for a non-AP wireless device to establish links with multiple AP wireless devices in the multi-AP system when initially forming an association with the multi-AP system, and/or for the non-AP wireless device to establish one or more additional links with AP wireless devices in the multi-AP system after the non-AP wireless device is already associated with the multi-AP system, according to various embodiments. To form one or more additional links once an association is already established, it may be possible to transmit an add link request (e.g., which may be transmitted to an AP wireless device with which the non-AP wireless device is requesting to add a link, or to another AP wireless device in the multi-AP system, such as an AP wireless device with which the non-AP wireless device already has one or more links established), and to receive an add link response in turn. As previously noted, in some embodiments, it may be the case that association requests are ultimately handled by a network controller for the multi-AP system, with the signaling being performed by way of the first AP device, in some embodiments. Add link requests/responses can similarly be handled by a network controller for the multi-AP system (e.g., with signaling performed byway of the AP wireless device that receives the add link request), in some embodiments.

It may be the case that at least some communication parameters for performing communication between a non-AP wireless device and any AP wireless devices in the multi-AP system are unified. For example, as one possibility, unicast frames communicated between a non-AP wireless device and AP wireless devices in the multi-AP system (such as the first AP wireless device and/or the second AP wireless device) may be encrypted using the same peerwise transient key (PTK).

It may be possible to enable/disable various wireless links between a non-AP wireless device and any AP wireless devices with which the non-AP wireless device has established a wireless association in the multi-AP system, at least according to some embodiments. In some instances, it may be the case that only a subset of wireless links that are between a non-AP wireless device and a single AP wireless device can be active/enabled at any given time. Thus, it might be the case that one or more links for the first wireless association are enabled and one or more links for the second wireless association are disabled at one time, but that at another time (e.g., based on wireless device mobility within the multi-AP system, as one possibility) the one or more links for the first wireless association are disabled and the one or more links for the second wireless association are enabled. In this example, it may be the case that the wireless device retains both the first wireless association and the second wireless association at both times (e.g., regardless of which link set is enabled/disabled). Since both associations are retained, the link enablement/disablement to transition from one actively used association to another actively used association, it may be possible that delays, overhead, and risk of association failure are drastically reduced in comparison to even fast basic service set (BSS) transitions, e.g., in which links to only a single physical device are maintained at any given time.

In some embodiments, it may further be possible that a non-AP wireless device can have links enabled with multiple AP wireless devices in the multi-AP system concurrently. For example, in such a scenario, the non-AP wireless device could enable at least one link for the first wireless association and at least one link for the second wireless association concurrently. Thus, the non-AP wireless device may be able to perform data communication with both the first AP wireless device and the second AP wireless device. Supporting such an arrangement may help improve reliability, e.g., in coverage edge scenarios, as data may be communicated on both links, and ping-pong transitions between the available AP wireless devices may be avoided since links with all such devices may be available at the same time.

The multi-AP may support any of a variety of possible power save features. As one such possibility, it may be possible to place some or all enabled links for a multi-AP association of a non-AP wireless device into a power save mode. It may be the case that traffic is not carried on such links. It may be the case that the non-AP wireless device and/or a corresponding AP wireless device for such a link is able to quickly resume using the link, e.g., in case buffered traffic arrives for transmission, because of changes in wireless medium conditions (e.g., due to device mobility, as one possibility), and/or for any of various other reasons, because the link may remain enabled while in the power save mode, at least according to some embodiments.

Note that TID-to-link mapping (and potentially link enablement more generally) may be separate/independent for uplink and downlink data transmission directions, in some embodiments. Thus, for the non-AP wireless device, it could be the case that at least one link for the first wireless association and at least one link for the second wireless association are concurrently enabled in the downlink direction (e.g., one or more downlink TIDs might be mapped to each of these links) but only one or more links for the first association are enabled for the uplink direction (e.g., one or more uplink TIDs might be mapped to these links, while no uplink TIDs are mapped to any links for the second wireless association), or that at least one link for the first wireless association and at least one link for the second wireless association are concurrently enabled in the uplink direction but only one or more links for the first association are enabled for the downlink direction, among various possibilities.

In some embodiments, it could be possible that the TID mapping mode in use for a multi-AP association can impact where certain multi-AP system management operations are performed for the association. For example, in some instances, for a roaming mode in which (at least a subset of) uplink and downlink frames can be transmitted on any AP wireless device in the multi-AP system, it could be the case that uplink reorder buffering and downlink transmit buffering are performed at the network controller. In a TID mapping mode in which uplink and downlink frames can be transmitted on links with only one AP wireless device in the multi-AP system at a time, it could be the case that uplink reorder buffering and downlink transmit buffering are performed at that AP wireless device. For TID mapping modes in which traffic in one direction can be transmitted on links with only one AP wireless device in the multi-AP system at a time while traffic in the other direction can be transmitted on links with any of multiple AP wireless devices in the multi-AP system, a hybrid approach could be used. For example, if uplink frames can be transmitted on any link while downlink frames are limited to transmission via one AP wireless device, it could be the case that uplink reorder buffering is performed at the network controller, while downlink transmit buffering is performed at the AP wireless device. Note that other correlations between TID mapping mode and management operation implementation options are also possible, and that embodiments are also envisioned in which TID mapping mode is not directly tied to other multi-AP system management operations.

Thus, according to the methods of Figures 4-5, it may be possible to establish a multi-AP system, in which wireless devices may associate with multiple AP devices of the multi-AP system. Such techniques may improve any or all of throughput, reliability, and/or power consumption, among various possible benefits, at least according to some embodiments.

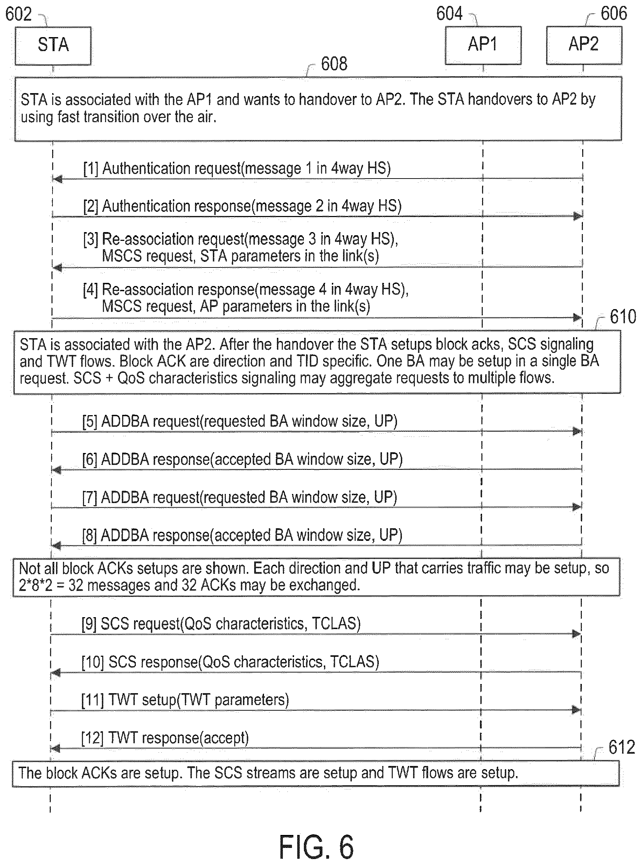

### Figures 6-so and Additional Information

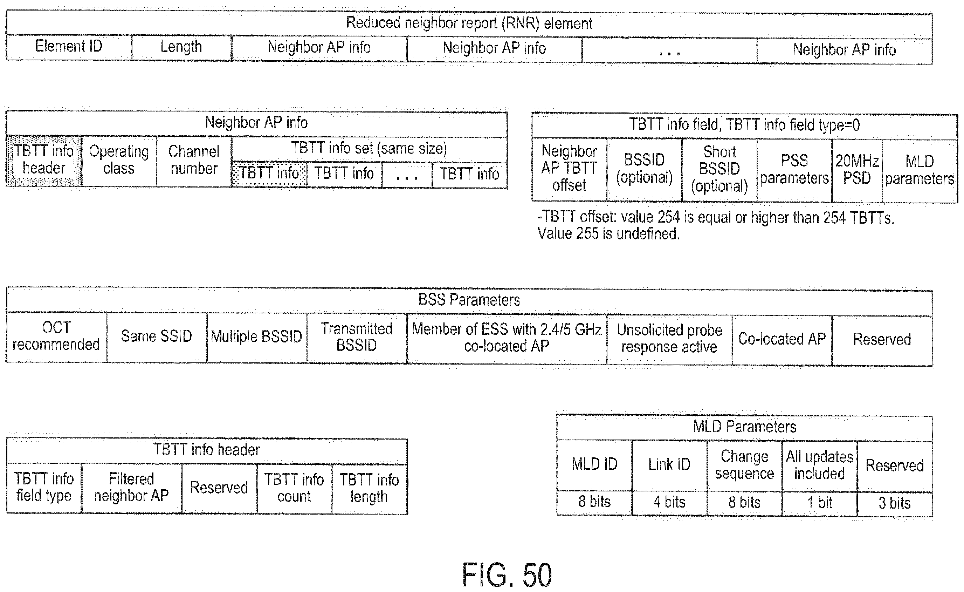

Figures 6-50 illustrate and describe further aspects that might be used in conjunction with the method of Figures 4-5 if desired. It should be noted, however, that the exemplary details illustrated in and described with respect to Figures 6-50 are not intended to be limiting to the disclosure as a whole: numerous variations and alternatives to the details provided herein below are possible and should be considered within the scope of the disclosure. Accordingly, terms used in the following examples such as 'mandatory,' 'required,' 'always,' 'must,' 'shall,' and other similar such terms should be understood as being used in the context of specific example scenarios and embodiments and not as necessarily applicable to all scenarios and embodiments possible within the scope of the disclosure.

In an IEEE 802.11 wireless communication system, it may be the case that a BSS transition causes a break to data transmission. For example, at least some BSS transition mechanisms may require on the order of 30 message transmissions, which can create delay and overhead. A block acknowledgement (BA) may be sent separately for each traffic identifier (TID) and direction (uplink/downlink), stream classification service (SCS) setups, target wake time (TWT) setups, new keys, etc. This may make it challenging to maintain 5-10 ms transmission delays for BSS transitions.

Further, it may be possible that a BSS transition can fail. For example, a re-association request may be rejected by an access point (AP), in which case the transitioning station (STA) may not have any association. If a link only to a single physical device is maintained, a STA may perform ping-pong BSS transitions between two APs, e.g., if the links' performance varies.

Supporting multi-AP association may reduce the number of BSS transitions that are performed in an IEEE 802.11 wireless communication system, in some embodiments. For example, it could be possible that residential networks with such capability could operate with no BSS transitions, and/or for enterprise networks to operate with 90% reduction to the number of BSS transitions, e.g., in comparison to Wi-Fi 7 networks, at least in some embodiments.

Figure 6 is a flowchart diagram illustrating example signaling aspects of a possible fast BSS transition, according to some embodiments. The fast BSS transition may reset all existing keys, block ACKs (BAs), TWT setups, and SCS stream setups; the STA may start operation in the new AP from scratch. Note that the BA setups may require transmission of approximately 30 messages and acknowledgements. All of this signaling may add delays before the STA may start transmitting new data. Additionally, as previously noted, if the target AP rejects the reassociation signaling from the STA, then the STA may not have any association, and may not be able to send any data, which may add further delays to data transmissions.

As shown, in the example scenario, in 608, an STA 602 may initially be associated with AP1 604 and may be performing handover to AP2 606. The transition signaling may include a 4-way handshake and association. Note that preparation for the link setup may not be possible in this scenario. In 610, the STA 602 may be associated with the AP2 606. After the handover, the STA may setup BAs, SCS signaling, and TWT flows. The BAs may be direction and TID specific. One BA may be setup in a single BA request. SCS and QoS characteristics signaling may aggregate requests to multiple flows. Note that not all BAs setup are illustrated in Figure 6; it may be the case that each direction and user priority (UP) that carries traffic is setup, so 2^{∗}8^{∗}2=32 messages and 32 ACKs may be exchanged. In 612, the BAs are setup, the SCS streams are setup, and the TWT flows are set up, and the transition may be complete.

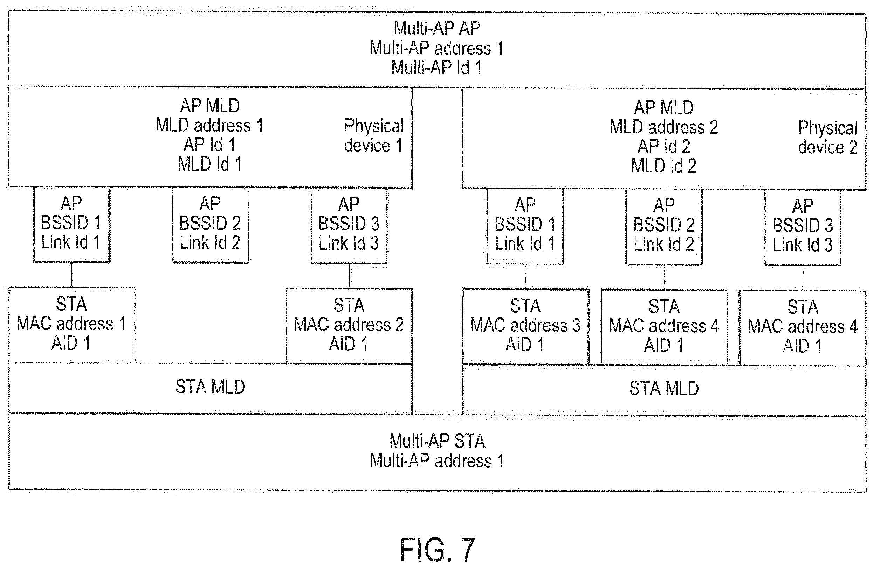

To reduce BSS transitions, it may be possible to support a STA associating with a group of APs, which may also be referred to as an AP multi-access point (AP MAP). Figure 7 illustrates example aspects of one such possible scenario, according to some embodiments. As shown, a multi-AP STA (e.g., a single physical device) may have one or more links with one or more AP multi-link devices (MLDs) (e.g., each of which may be a separate physical device operating within the MAP AP).

The STA may operate in a post-associated state and data transmissions may continue without interruption when the STA moves in the AP MAP. The multi-AP association may build on Wi-Fi 7 rules. The STA and AP capabilities may be configured for each link. Unicast frames may be transmitted over any link: all links may use the same BA setup and the same Peerwise Transient Key (PTK) (encryption). A STA may receive group data frames from any link; each AP/link may have a different group key, and group frames may have joint sequence numbering. Possible updates to Wi-Fi 7 rules may include non-AP link management rules, in some embodiments.

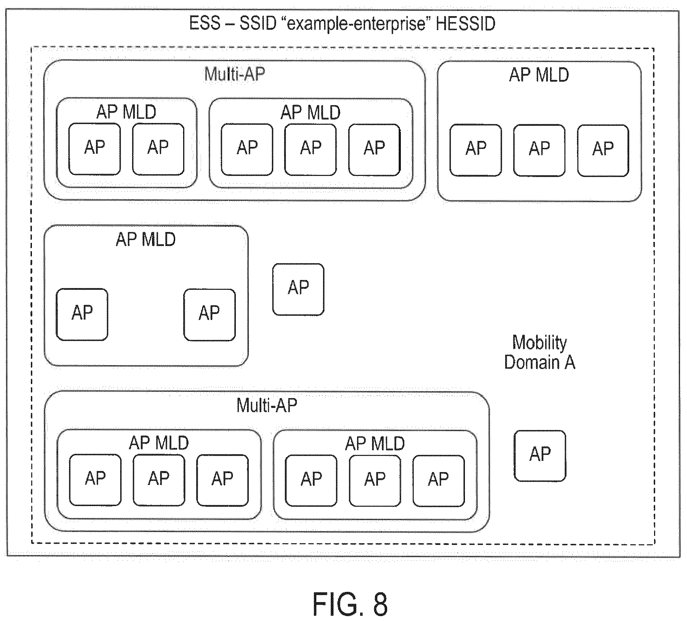

Figure 8 illustrates aspects of an example extended service set and mobility domain deployment scenario, in which one or more MAP APs may be deployed, according to some embodiments. As shown, such an extended service set (ESS) may contain one or more APs, potentially including zero or more AP MLDs and zero or more MAP APs. Each MAP AP may contain one or more AP MLDs, and each AP MLD may contain one or more APs. A MAP STA may be associated with a MAP AP, AP MLD, or AP in an ESS at a time. An ESS may have one or more mobility domains. It may be the case that fast BSS transitions are supported within APs / AP MLDs / AP MAPs in the mobility domain.

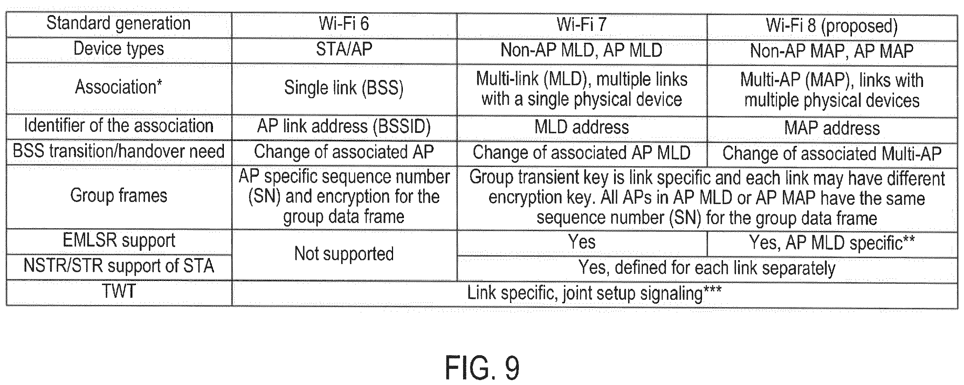

Figure 9 is a table illustrating a comparison of various features of different Wi-Fi generations according to one possible evolution. In the illustrated scenario, the association may define the links and APs to/from which the STA may send data. Unicast data may have the following joint parameters in each link: joint sequence number (SN) and packet number (PN), PTK, and BA. With respect to enhanced multi-link single radio (EMLSR) support, note that a MAP may define EMLSR in use for each AP MLD separately, at least in some embodiments. For TWT, it may be the case that signaling can setup TWT to any enabled links.

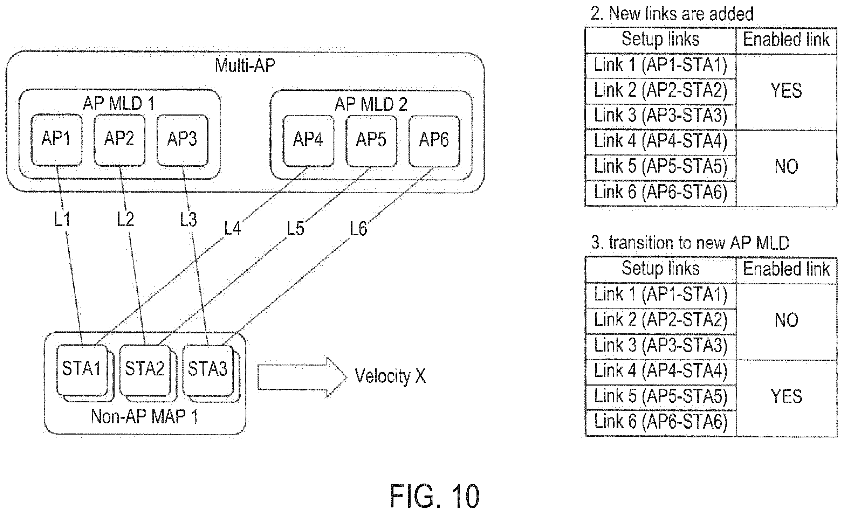

Figure 10 illustrates aspects of an example link switching scenario in a post-associated state, according to some embodiments. As shown, a non-AP MAP ("non-AP MAP 1") that is moving at a certain velocity ("X") may determine to switch links from one AP MLD ("AP MLD 1") in its MAP to another AP MLD ("AP MLD 2") in the same AP MAP. After discovering the AP MLD 2, non-AP MAP 1 may create new links with AP MLD 2. All links may be created in association, or the non-AP MAP may add links 4, 5, and 6, using an add link message through the existing link (e.g., with AP MLD 1). After the links 4, 5, 6, have been created, the non-AP MAP may enable those links 4, 5, 6 with AP MLD 1, and disable links 1, 2, and 3 with AP MLD 1.

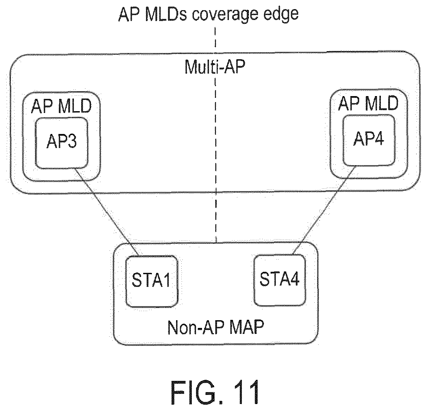

Figure 11 illustrates aspects of an example link switching scenario in which multiple AP MLDs in an AP MAP are at coverage edge for a non-AP MAP, according to some embodiments. In the illustrated scenario, since links with multiple AP MLDs in the AP MAP may be available to the non-AP MAP, it may be possible to avoid ping-pong transitions. This may also potentially provide improved reliability, and it may be possible to send data on both links.

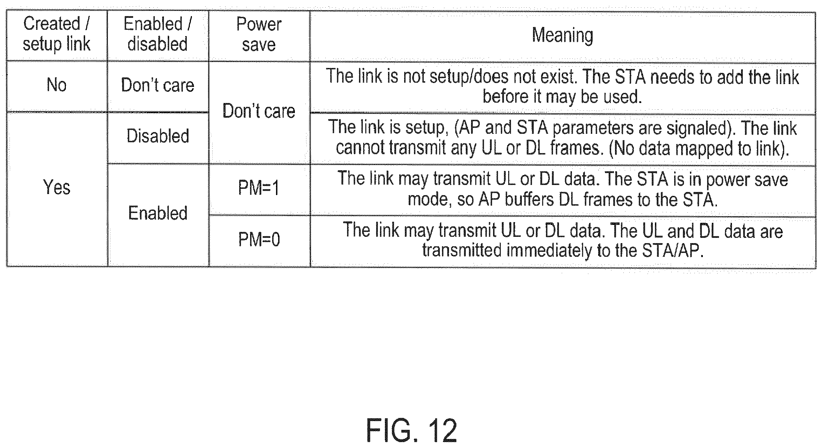

Figure 12 is a table illustrating possible link operation modes that could be used in a MAP system, according to some embodiments. Such operation modes may be used to support the possibility that a STA may create multiple links, but not necessarily operate on all of the links. The links may be virtual, in which case it may be possible that non data is transmitted on them. The links may be quickly changed, however, to be able to carry data frames. In Wi-Fi 7 it may be the case that each setup link is configured to a different mode.

There may be numerous potential benefits of reducing the number of handovers in an IEEE 802.11 based wireless communication system, at least according to some embodiments. It may be the case that handover delays are reduced, leading to more reliable data transmission delays; as previously noted, it may be the case that the transition between AP MAP links can be relatively fast. For the non-AP MAP (e.g., the STA), power saving maybe increased; the STA may receive beacons from multiple APs (e.g., from a larger area) and have less signaling. The best link can be taken into use quickly, with no setup signaling overhead. Multiple links and operating channels may be available for use, and the STA may operate on the most suitable channels. The STA may have multiple links available to find an available link for data transmission. It may further be possible that multi-AP association can enable more complicated transmission schemes. Association may create encryption keys, AID and configures STA and AP capabilities for each link. Such bookkeeping and information sharing may be the first step toward multi-AP transmissions, which may allow multiple APs to transmit or receive simultaneously to or from the STA. The AP may also more reliably be able to transmit all traffic; the frames may be forwarded within the AP MAP to the transmitting AP.

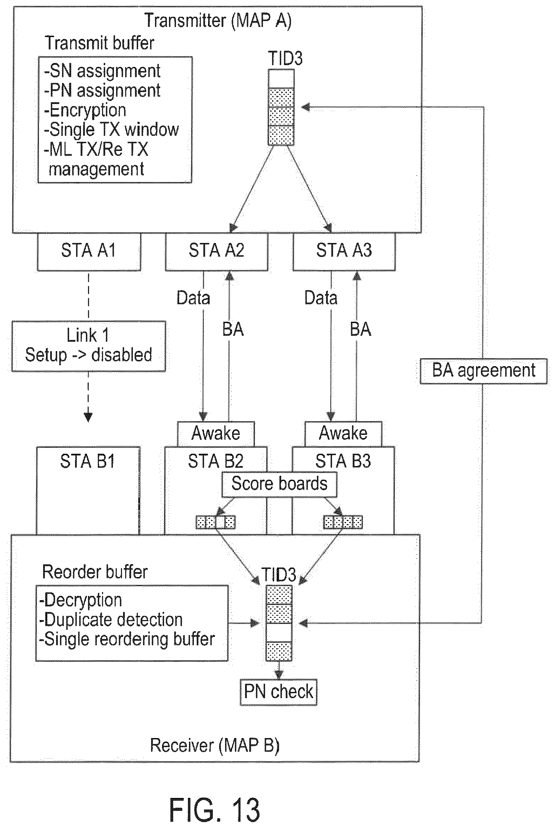

Figure 13 illustrates example aspects of a possible AP MAP architecture, according to some embodiments. As shown, a transmit buffer may be maintained on a transmitter side, which may provide downlink frames to a receiver via multiple links between multiple STAs. Frames received on the receiver side via the multiple STAs may be provided to a reorder buffer for decryption, duplicate detection, and reordering. Note that, at least in some instances, the approach illustrated in Figure 13 may apply for either or both of uplink (e.g., from a non-AP STA to an AP STA) or downlink (e.g., from an AP STA to a non-AP STA) transmission.

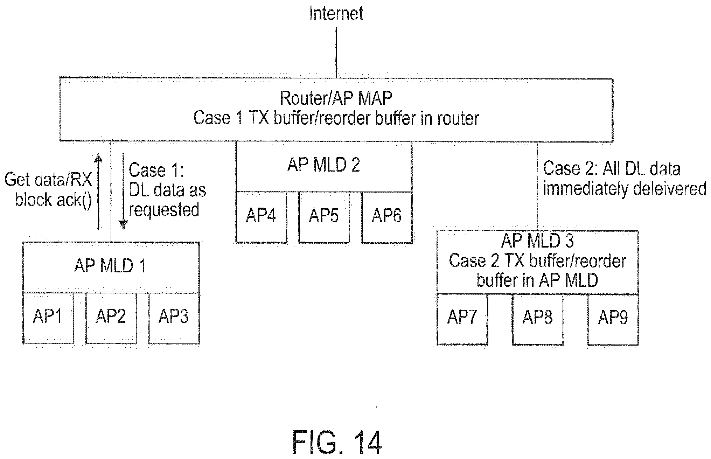

For an AP MAP that includes multiple physical devices (e.g., AP MLDs), it may be useful to identify and set guidelines or requirements for downlink frames transmit buffering (e.g., which device on the AP side should implement downlink frame transmit buffering) and/or uplink frames reorder buffering (e.g., where on the AP side are the received uplink frames ordered). Some possibilities could include a router device (e.g., which may implement AP MAP functionality to support inclusion of multiple physical devices in the AP MAP) or the closest AP MLD (e.g., in the network architecture context) to the corresponding STA. Figure 14 illustrates aspects of an example system in which either such possibility could be implemented. As shown, as "Case 1", the transmit buffer and reorder buffer may be maintained in a router device, which may provide downlink data to an AP MLD ("AP MLD 1") for downlink transmission to a STA associated with the AP MLD 1 as requested by the AP MLD 1. The router device may also get uplink data and receive block acknowledgements from the STA via the AP MLD 1 so as to be able to perform uplink reorder buffering at the router device. In "Case 2", the transmit buffer and reorder buffer may be maintained in an AP MLD device ("AP MLD 3") that is a physically distinct device from the router. In this case, all downlink data for a STA associated with the AP MLD 3 may be immediately delivered to the AP MLD 3, which may perform transmit buffer functions. Similarly, the AP MLD 3 may perform uplink frame reordering for the STA, and may pass uplink data that has already been reordered to the router.

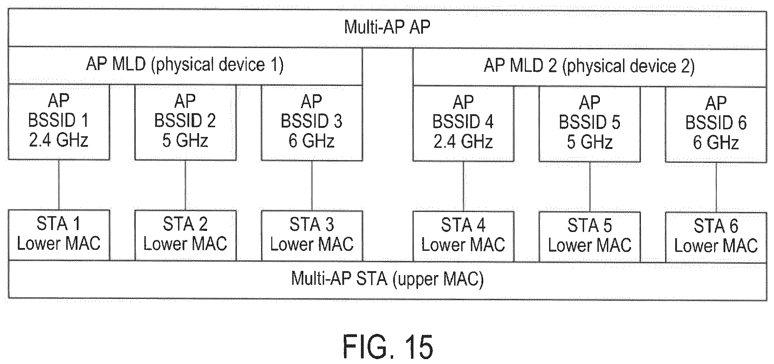

Figure 15 illustrates example aspects of a possible non-AP MAP architecture, according to some embodiments. As previously noted, a non-AP MAP may be one physical device. The non-AP MAP may have one or more chips operating in different bands. A chip may implement lower MAC operations, e.g., TXOP obtaining, BA scoreboards, etc. The non-AP MAP layer may implement upper MAC operations. For example, for uplink frames, upper MAC may allocate SN, encrypt, and transmit buffer the frames, while for downlink frames, upper MAC may decrypt frames and reorder buffer the frames.

Note that as another possibility, e.g., in comparison to an architecture in which association to a MAP AP is supported, an architecture in which mobility domain operation supporting multiple associations could be implemented. Note that, at least according to some embodiments, a mobility domain may be different than multi-AP coverage. There may be no need to have the same fast transition device set as devices in the multi-AP joint link set. The mobility domain may contain legacy STAs and MLDs, in some embodiments. It may be the case that the AP identifier of the association for an association to a multi-AP AP is a multi-AP AP address, while for multiple associations in a mobility domain, the mobility domain ID and AP MLD address(es) may be used. For both association to a MAP AP and multiple associations in a mobility domain, it may be the case that a MAP STA address can be used as a STA identifier, and IP address maintenance and fast BSS transitions may be possible within a mobility domain. It may be the case that MAP STAs within a MAP AP system can have joint links. It may be the case that AP MLDs within a mobility domain 2 (which may be a separate mobility domain to a fast transition (FT) mobility domain or "mobility domain 1") can have joint links. For both association to a MAP AP and multiple associations in a mobility domain, fast transitions to other devices may be possible in the (FT) mobility domain. To support association to a MAP AP, it may be the case that new MAP AP and MAP STA types are defined. To support multiple associations in a mobility domain, it may be needed that two mobility domains can exist in the same area, including a new mobility domain for STAs that create joint links. It may be the case that MAP APs, AP MLDs, and legacy APs can all be supported in an architecture framework that supports association to a MAP AP. It may possibly be the case that only AP MLDs are supported in the new mobility domain for an architecture framework that supports multiple associations in a mobility domain, while legacy and AP MLD can be supported on the FT mobility domain. For an architecture framework that supports association to a MAP AP, there may be no need for change to mobility domain operation, and one mobility domain for FT protocol can be deployed. For an architecture framework that supports multiple associations in a mobility domain, there may be need for a mobility domain for AP MLDs that may participate to multi-AP links, as well as one for legacy STAs FT transitions.

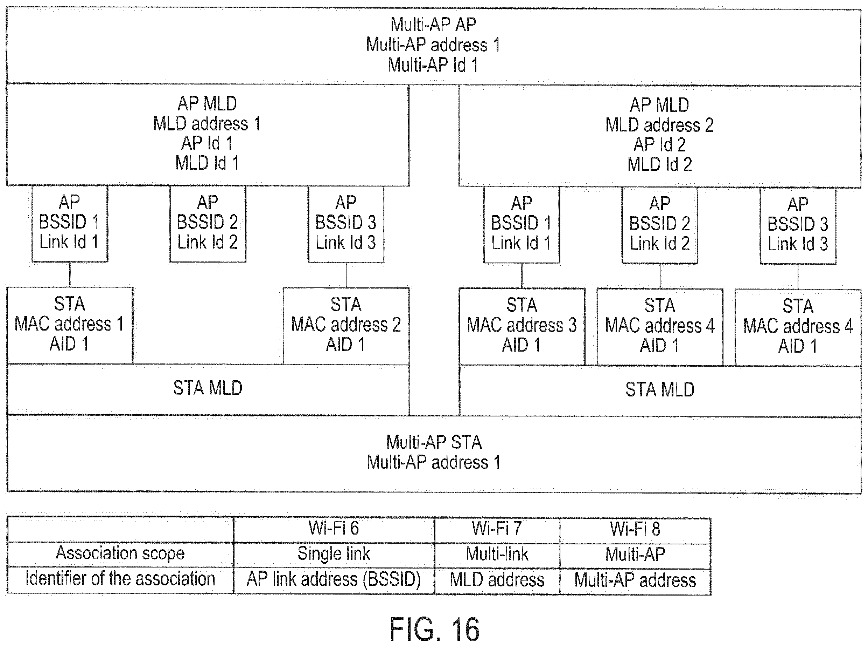

Figure 16 illustrates further example aspects of a possible MAP system architecture, according to some embodiments. As shown, there may be multiple identifiers on each of the AP and STA sides at various layers of the system. It may be the case that, in addition to multi-AP association scope between a MAP AP and a MAP STA using MAP addresses, a MAP AP also supports Wi-Fi 7 AP MLD level associations (e.g., with multi-link association scope using MLD addresses) and Wi-Fi 6 single link associations (e.g., with single link association scope using AP link addresses (BSSIDs)).

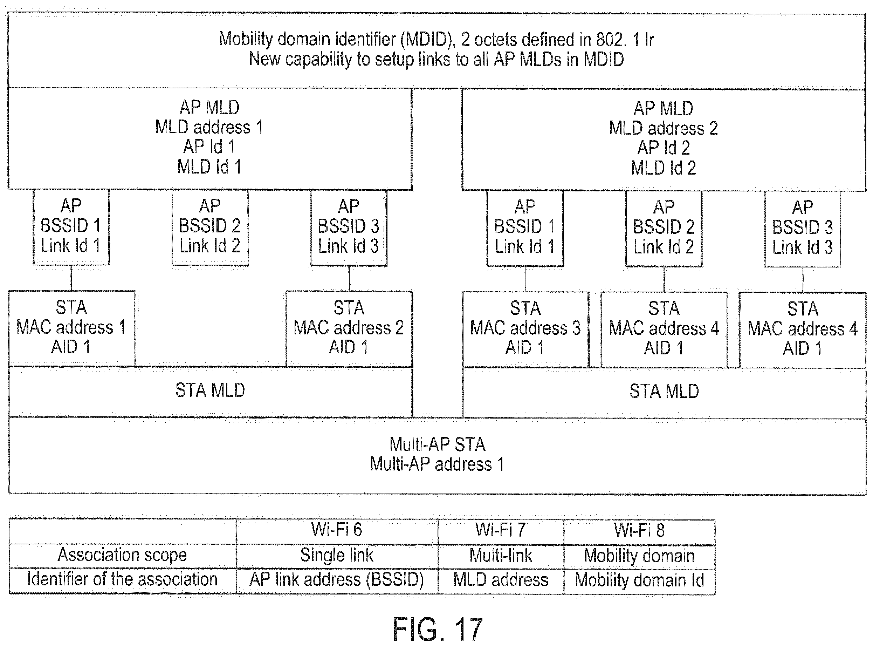

Figure 17 illustrates example aspects of an alternative system architecture with a mobility domain enhancement, according to some embodiments. As shown, in the illustrated example architecture, a mobility domain identifier (MDID), which may be a 2 octet value defined in 802.11r, may be used as an AP MLD group identifier, which may provide capability to setup links to all AP MLDs in the AP MLD group (e.g., those with the same MDID). The STAs and APs may continue to have a 2-level hierarchy for its MAC addresses. Thus, in addition to mobility domain association scope between a group of MLD APs and a STA using MDIDs, Wi-Fi 7 AP MLD level associations (e.g., with multi-link association scope using MLD addresses) and Wi-Fi 6 single link associations (e.g., with single link association scope using AP link addresses (BSSIDs)) may also be supported in this example scenario.

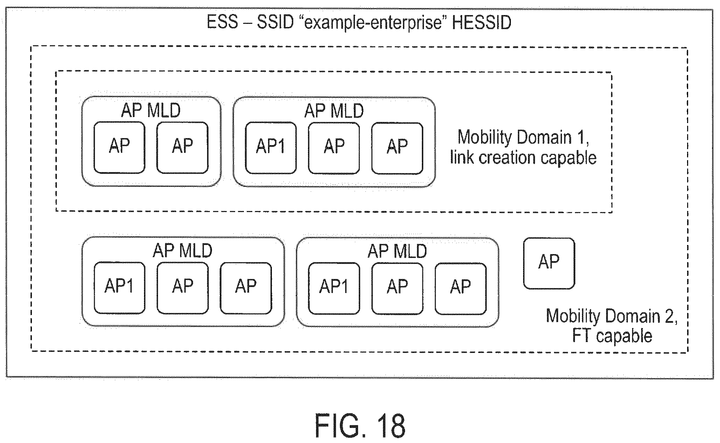

Figure 18 illustrates example aspects of a possible extended service set in which such a mobility domain enhancement is deployed, according to some embodiments. The ESS may contain one or more APs, of which zero or more may be AP MLDs; an AP MLD may contain one or more APs. As shown, the ESS may include a FT mobility domain ("Mobility Domain 2"), within which fast BSS transitions may be possible. The ESS may further include another mobility domain ("Mobility Domain 1"), which may be link creation capable, meaning that a multi-AP STA may be associated with multiple AP MLDs at the same time.

The following section includes possible similarities and differences of management operations and characteristics between AP MAP operation AP MLD (e.g., legacy AP) operation, according to some embodiments. For MLME-AP-START (e.g., when a new AP MLD or AP MAP starts), for an AP MLD, the AP operations parameters may be configured and the AP may start beaconing. The AP MAP parameters may be configured, the configured device may scan for an available AP MAP, and if a suitable AP MAP is discovered, the device may become part of the AP MAP. If a suitable AP MAP is not discovered, the device may establish a new AP MAP. For discovery, an AP (MLD) may send beacons, probe responses, ML probe responses, and reduced neighbor report to be discoverable. For an AP MAP, AP MAP parameters may be included to the existing elements and management frames. For association, a STA (MLD) may associate with an AP (MLD), the STA and AP parameters may be configured for the setup links. A non-AP MAP may associate with an AP MAP. The STA and AP parameters may be configured for the setup links. For authentication and 4-way key exchange, for both AP MLD and AP MAP operation, a single PTK may encrypt all unicast frames. Unicast frames may be transmitted in any link. Group frames may be encrypted by link specific key. All group keys may be shared to an associated STA. To add a link to the association may not be supported for a AP MLP; a non-AP MLD may need to reassociated, and redo all signaling, to add links to the association. To add a link to the association may be supported for a AP MAP; a non-AP MLD may add new links to the association without reassociation and re-setup of all parameters. For TID-to-link mapping, for AP MLD operation, the STA and AP may configure the link(s) that may carry traffic from a TID. For AP MAP operation, in addition, further TID-to-link mapping modes may be available. For power save, in both scenarios, an STA may be available on an enabled link by sending a power management (PM) field with value 1. For legacy AP operation, fast BSS transition may enable transitions between APs and/or AP MLDs. For AP MAP operation, fast BSS transition may enable transitions between APs, AP MLDs, and/or AP MAPs.

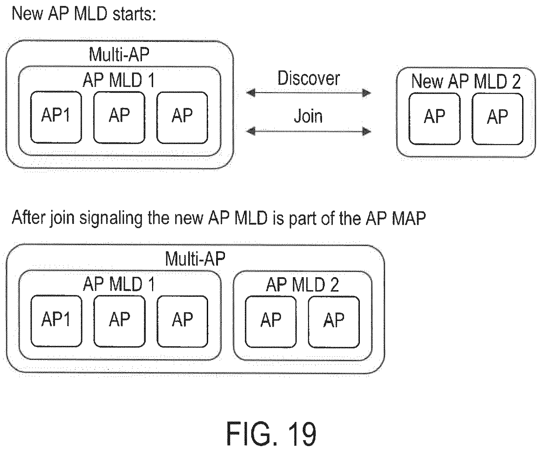

Figures 19-20 illustrate example aspects of possible starting operation of a new AP MLD that joins an AP MAP, according to some embodiments. As shown in Figure 19, a new AP MLD ("AP MLD 2") may start up, for example including performing a MLME-START primitive. The AP, AP MLD, and AP MAP parameters may be configured for the AP MLD 2, and the APs may start to send beacons. The AP MLD 2 may perform discovery and join with an available AP MAP; the signaling to join to the discovered AP MAP may include authentication, key setup, and capabilities signaling. The new APs and AP MLDs may be added to beacons, probe responses, RNRs, etc., for the AP MAP.

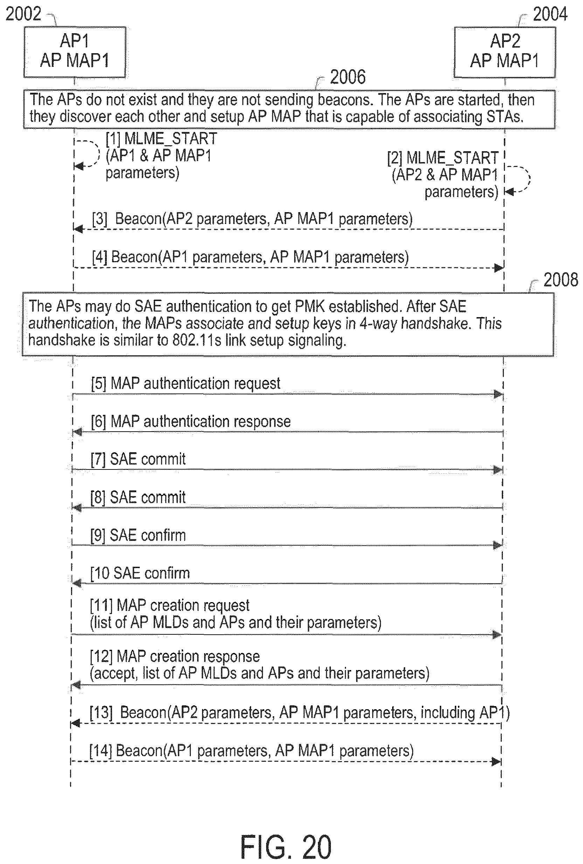

Figure 20 illustrates a possible MLME-Start signaling flow for discovery and joining of an AP1 2002 and an AP 2 2004 to form an AP MAP 1, according to some embodiments. In 2006, the APs do not yet exist and are not sending beacons. The APs may be started, then may discover each other and setup an AP MAP that is capable of associating with STAs. In 2008, the APs may perform SAE authentication to establish PMK. After SAE authentication, the MAPs may associate and setup keys in a 4-way handshake, which may be similar to 802.11s link setup signaling.

There may be multiple possible backbone network alternatives for supporting AP MAP operation. Such choice of backbone architecture may left as an implementation choice, at least according to some embodiments. Some such options could include wired backbone, Wi-Fi Easy Mesh, neighbor awareness networking (NAN), and/or IEEE 802.11s (MESH). A wired backbone option may include a Wired Ethernet or fibre connection, which may be outside the scope of 802.11 specifications. In this option, it may be the case that only wired transmissions are supported in the network backbone, 802.11 specifications may not define the backbone operation (e.g., it may be left to device vendors to implement). A Wi-Fi Eash Mesh option may have a hierarchical structure, with transmissions only to/from the Internet, in some embodiments. In this case, a backbone AP may have multiple BSSs: an ingress AP may host a BSS that has associated egress nodes similar to a non-AP STA. Other BSSs may serve end devices (e.g., non-AP STAs). Single user (SU), multi-user (MU), and triggered transmissions may be supported in such a network backbone, in some embodiments. A MU physical layer protocol data unit (PPDU) or a trigger based (TB) PPDU may carry frames to backbone and associated non-AP STAs. It may be the case that the backbone only operates for APs. Infrastructure BSS features (triggering, TWT, etc.) may be relatively simple to add to the ingress BSSs, e.g., for backbone. A NAN option may have a non-hierarchical structure; any NAN device may communicate with any NAN STA. In this option, it may be the case that backbone devices are NAN STAs. It may be the case that SU transmissions are supported in such a network backbone. A P2P transmission mode, which MAC and PHY support, may be targeted to non-AP STAs capabilities. The end devices may get their transmissions also through NAN, in some embodiments. A 802.11s option may also have a non-hierarchical structure; a mesh STA may create a mesh link with another mesh STA. Transmissions may be performed over the mesh links. Each STA may be a mesh STA. It may be the case that SU transmissions are supported in such a network backbone. Note that mesh may not currently support features introduced after 802.11ac, such that changes may be needed to introduce Wi-Fi 6 and 7 features.

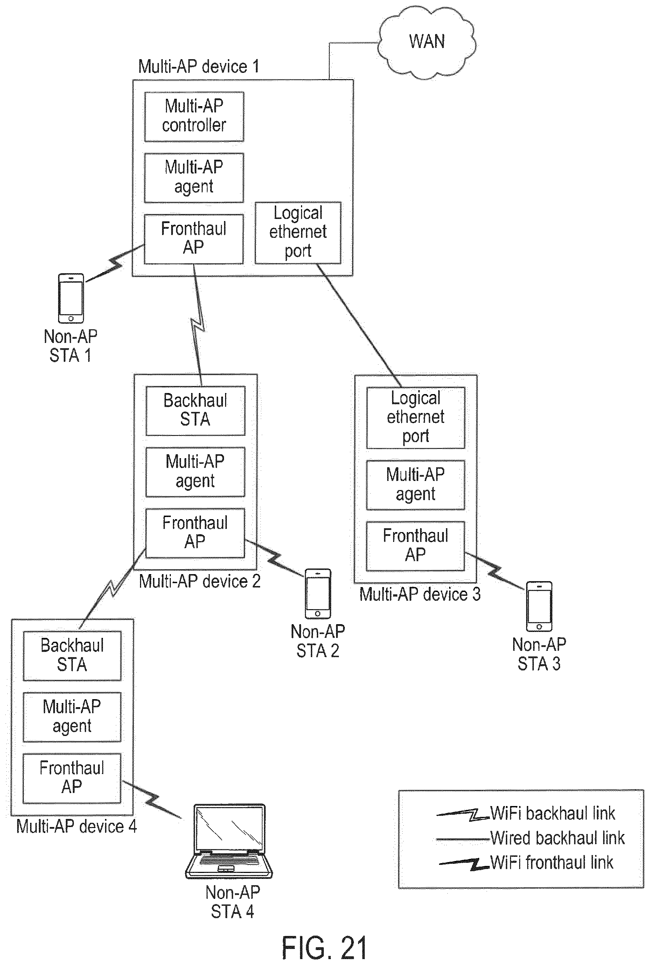

Figure 21 illustrates example aspects of a possible easy mesh deployment, according to some embodiments. Eash mesh specifications may specify on-boarding and setup procedures. Support may be provided for QoS and transmissions. Eash Mesh may be capable of providing standardized AP-to-AP interfaces within the AP MAP; it may be possible that AP MAP internal operations are not defined in 802.11 specifications. It may be the case that a STA is associated with 1 AP at a time; this AP may manage all UL and DL traffic to this STA. It may be possible that no inter-AP communication at the same hierarchy level is supported; alternatively, support for such communication may be added, according to some embodiments.

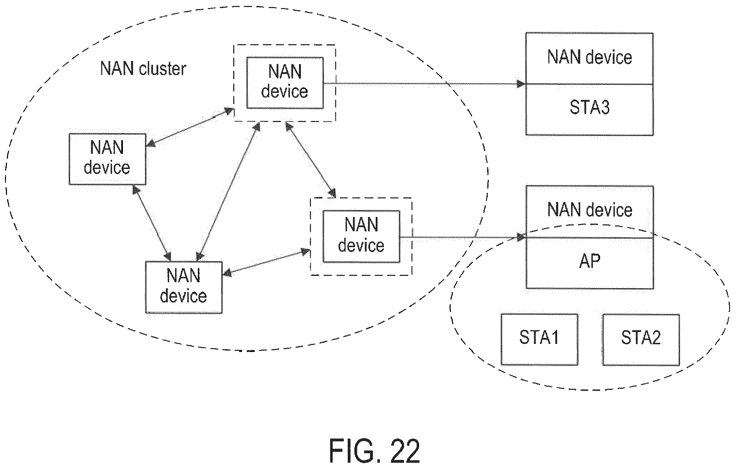

Figure 22 illustrates example aspects of a possible NAN topology, according to some embodiments. NAN capable STAs may participate to backbone operations directly, at least in some embodiments. This may help with D2D link transmissions and Internet transmissions. It may be the case that all NAN devices may directly communicate with each other. NAN may include support for scheduling signaling for power save and time division multiple access (TDMA). Triggering support and MU PPDU transmissions may not be supported, at least in some instances, which could increase forwarded traffic delays.

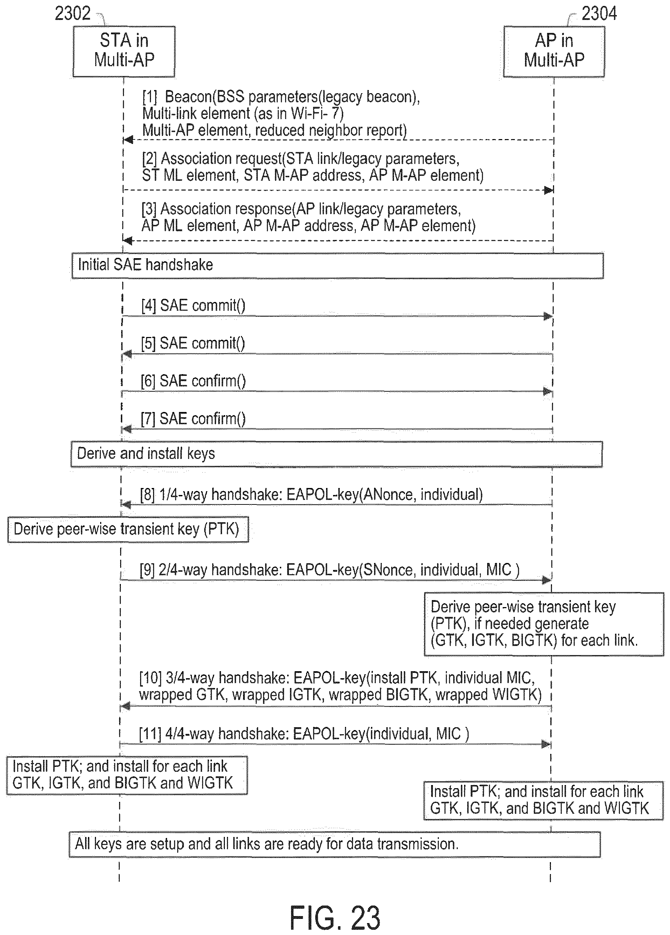

Figure 23 is a signal flow diagram illustrating possible AP MAP discovery and association features, according to some embodiments. As shown, the signal flow may be performed between an STA 2302 and an AP 2304 in a multi-AP system. The beacon and probe response frames may have a multi-AP element containing multi-AP parameters and capabilities. Other AP MLD and AP parameters may not be present to shorten overheads. The reduced neighbor report (RNR) may include the available AP MLDs and APs that belong to the AP MAP. For the non-AP MAP 2302 to associate with the AP MAP 2304, the non-AP MAP 2302 may signal MLD and MAP parameters and provide STA capabilities for each requested link. The AP MAP 2304 may signal its MLD and MAP parameters and provide AP parameters for each setup link. After successful association, the non-AP MAP 2302 maybe associated and have one or more setup links. The 4-way handshake may setup multiple keys: a PTK that is used in all links in the MAP, as well as a link specific GTK, IGTK, and BIGTK. All keys may be distributed to STAs and APs. One link may carry the association request, association response, and 4-way handshake frames. The link that carries the frames may be included as the setup links. It may be the case that a non-AP MAP is not able to operate simultaneously on all links; the non-AP MAP may select to operate only on a subset of the links, in some embodiments. After successful association, the setup links with the AP MLD that delivered the association signaling may be enabled; all TIDs may be mapped with these enabled links. The links with other AP MLDs may be disabled. After the association, the STA may be in power save for all links except the link that carried the association signaling. A STA may transmit UL frames and receive DL frames on any enabled link. A STA may switch to active mode on an enabled link.

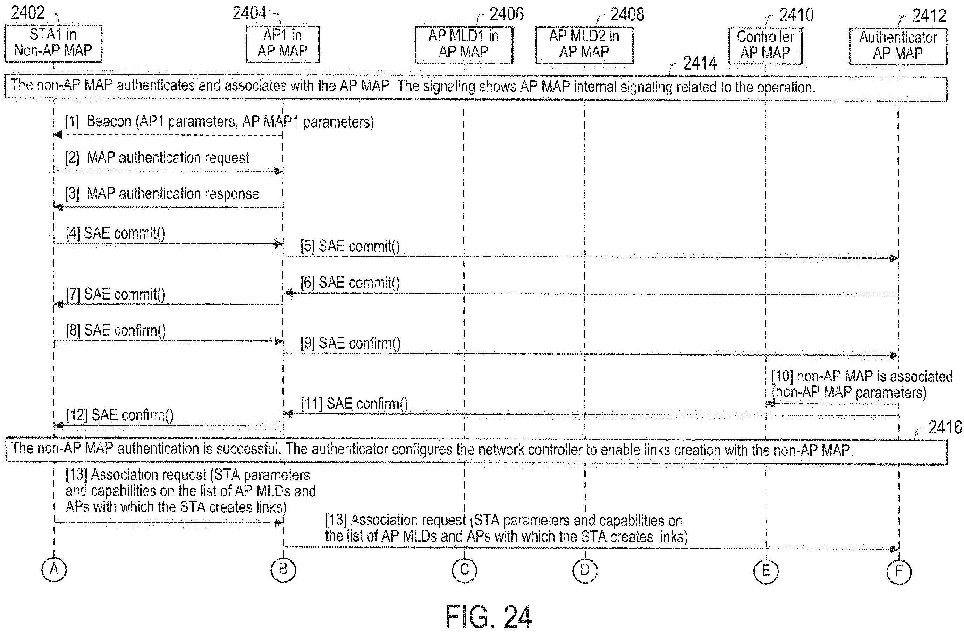

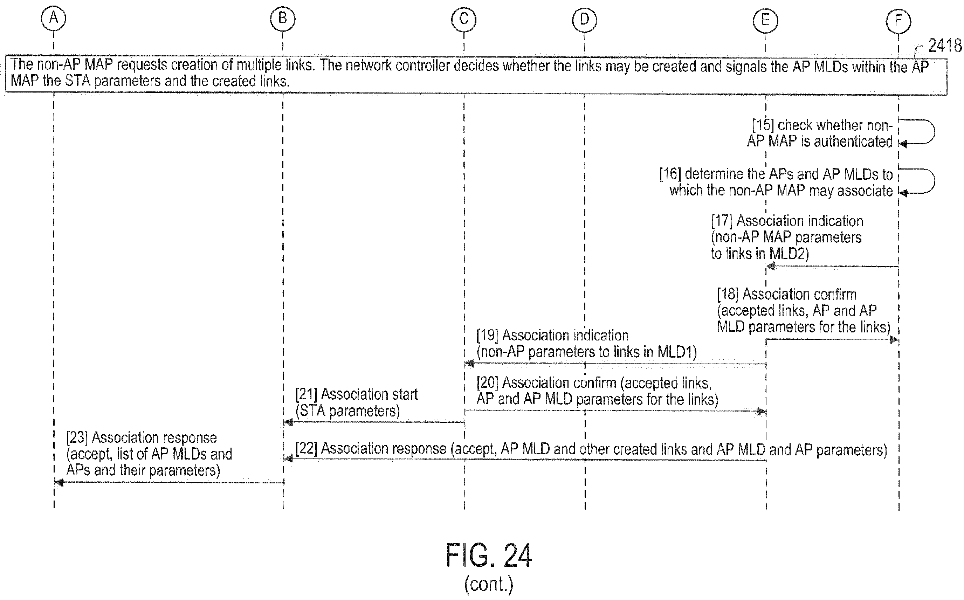

Figure 24 is a signal flow diagram illustrating possible association process features for an AP MAP, according to some embodiments. As shown, the signal flow may be performed between a STA1 2402 in a non-AP MAP, an AP1 2404 in an AP MAP, an AP MLD1 2406 in the AP MAP, an AP MLD2 2408 in the AP MAP, a controller 2410 in the AP MAP, and an authenticator 2412 in the AP MAP. In 2414, the non-AP MAP may authenticate and associate with the AP MAP, which may include AP MAP internal signaling to perform authentication with the authentication server. In 2416, the non-AP MAP authentication may be successful, and the authenticator may configure the network controller to enable links creation with the non-AP MAP. As shown, the association request frame provided by STA1 2402 to AP1 2404 may be forwarded to the network controller 2410. In 2418, the non-AP MAP may request creation of multiple links. The network controller may decide whether the links may be created and may signal the AP MLDs within the AP MAP to indicate the STA parameters and the created links. The network controller may orchestrate queries to AP MLDs to clarify which links are setup. An AP MLD may decide whether the requested links are created with its affiliated APs. The AP MLD may send responses to the AP MAP queries. The network controller may combine responses from AP MLDs, may possibly further reduce links or reject the association, and may create an association response that is sent to the STA.

The associations, established links, and STA parameters on the links may need certain bookkeeping. Each device (AP MLD and AP) in an AP MAP may maintain the parameters that are relevant for its operation. The AP MAP / network controller may have a database to store all non-AP MAP parameters. As an example, in some embodiments, as part of bookkeeping for all non-AP MAP associations, the AP MAP (network controller) may store, for each MAP association, STA and AP parameters for each link, non-AP MLD and AP MLD parameters to each MLD, and AP MAP and non-AP MAP parameters. As part of bookkeeping of non-AP MAP parameters that are relevant for an AP MLD, the AP MLD may store STA and AP parameters for each link of the AP MLD, non-AP MLD and AP MLD parameters for the association, and AP MAP parameters related to the AP MLD. As part of bookkeeping for link specific STA parameters, an AP may store AP MLD settings for the AP MLD in which the STA belongs.

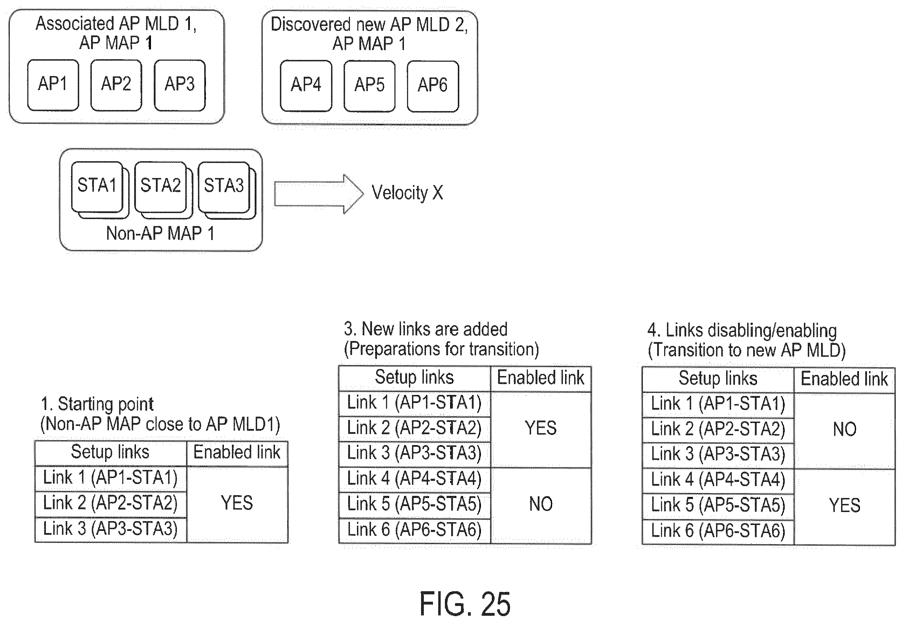

Figure 25 illustrates further aspects and features of a possible AP MLD transition within a multi-AP association, according to some embodiments. In the illustrated scenario, an AP MAP 1 may have a limitation to allow non-AP MAP devices to operate with only one AP MLD at a time, in some instances, although it may also be possible that a non-AP MAP device has operational capability to operate on multiple AP MLDs at the same time. A non-AP MLD may be moving at a certain rate such that after a certain time, a transition from active links with an associated AP MLD 1 (that is part of AP MAP 1) to links with a discovered new AP MLD 2 (that is also part of AP MAP 1) may be desired. The non-AP MAP may perform the following steps to change the operated AP MLD. As a first step, the non-AP MAP may discover AP MLD 2 (at this starting point, the non-AP MAP may be close to AP MLD 1), with links 1-3 between the non-AP MAP and AP MLD 1 enabled. Note that default TID-to-link mapping may be in place for these links. As a second step, the non-AP MAP may create new virtual STAs 4-6. As a third step, the non-AP MAP may add links 4-6 between the non-AP MAP and AP MLD 2. Initially, these links may be disabled while links 1-3 may remain enabled. As a fourth step, the non-AP MAP may enable links 4-6 and disable links 1-3. AP MLD transition TID-to-link mapping may be used after the link transitions.

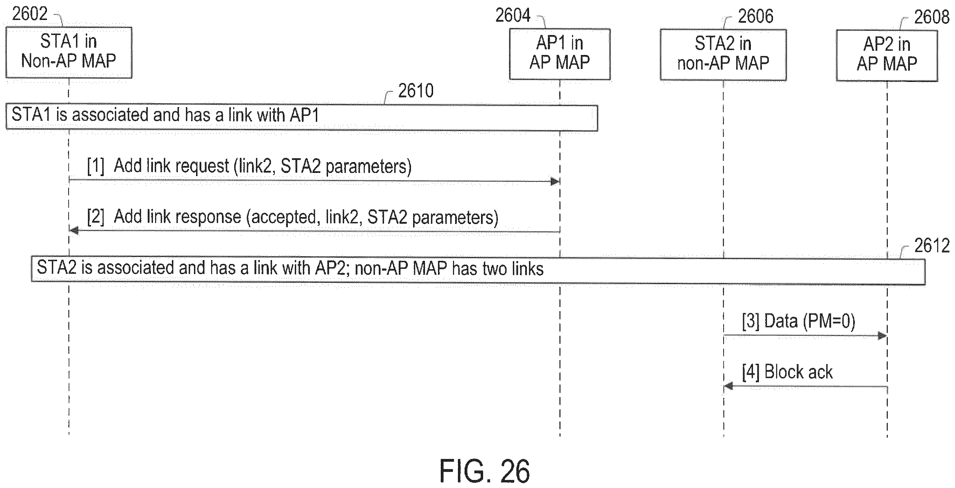

Figure 26 illustrates a possible signal flow for adding a link to a MAP association, according to some embodiments. The signal flow may be performed between a STA1 2602 in a non-AP MAP, an AP1 2604 in an AP MAP, a STA2 2606 in the non-AP MAP, and an AP2 2608 in the AP MAP. In 2610, the STA1 2602 may be associated and have a link with AP1 2604. An add link request and add link response may be exchanged between the STA1 2602 and AP1 2604. The add link request and add link response may be robust action frames (encrypted). The add link request may thus be sent over an existing link and may request new link creation to the AP MAP association. The add-link request may maintain the existing links and keys, and may thus just add one or more new links to the MAP association. After the link addition, in 2612, the STA2 2606 may be associated with the AP2 2608 and the non-AP MAP may have two links.

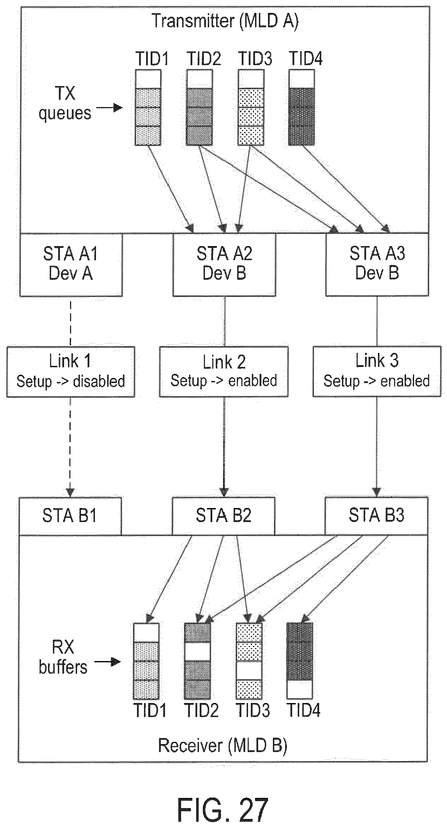

Figure 27 illustrates an example scenario showing various possible TID-to-link mapping features for MLD management, according to some embodiments. In the illustrated scenarios, a first link between a transmitter and receiver may be disabled (no TIDs may be mapped to the first link), TIDs 1-3 may be mapped to a second link between the transmitter and the receiver, and TIDs 2-4 may be mapped to a third link between the transmitter and the receiver. The TID-to-link mapping may define which traffic is transmitted in a link. Each TID and UL/DL direction may be mapped separately to the links. The TID-to-link mapping may also define whether a link may transmit traffic. For example, for a disabled link (e.g., link 1, in the illustrated scenario), it may be the case that no traffic is transmitted, and for an enabled link (e.g., links 2 and 3, in the illustrated scenario), traffic may be permitted to/from at least one TID and management frames. A non-AP MAP may use the TID-to-link mapping signaling to transition between AP MLDs, in some embodiments. A non-AP MAP may exchange data with one AP MLD at a time, in some embodiments. A non-AP MAP may map TIDs to a new AP MLD when it transitions to the new AP MLD.

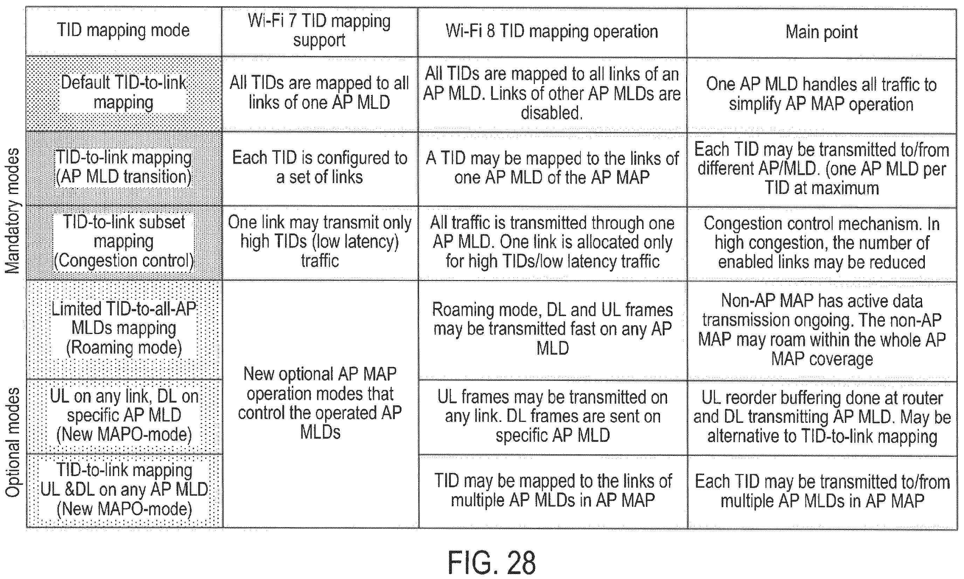

Figure 28 is a table illustrating possible features for TID-to-link mapping in a MAP association, including details for both MLD level (e.g., Wi-Fi 7) TID mapping support and MAP level (e.g., Wi-Fi 8, at least potentially) TID mapping operation. As shown, there may be a variety of possible mandatory and optionally supported modes that could potentially be used, e.g., depending on device capabilities and/or any of various other considerations, according to various embodiments. It should be noted that other TID mapping modes and/or variations on the illustrated TID mapping modes are also possible.

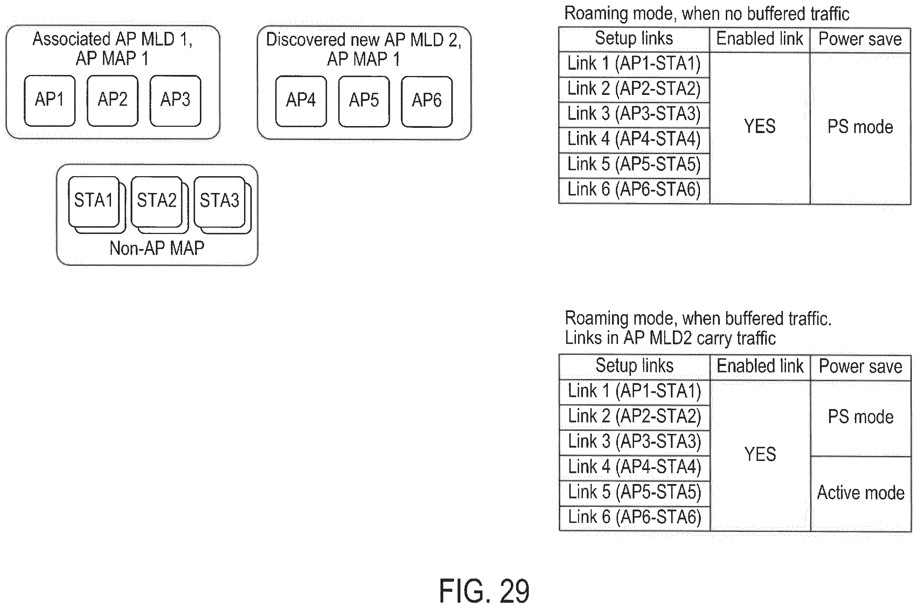

Figure 29 illustrates aspects of an example scenario in which a roaming mode could be used, according to some embodiments. In the illustrated scenario, a non-AP MAP may have 6 links that are all enabled. When no buffered traffic is present, all links may be in power save mode. When buffered traffic is present, the links with AP MLD 2 may carry the traffic. Note that the non-AP MAP in roaming mode may have a rule to allow STA(s) in one non-AP MLD to operate in active mode at a time, in some embodiments. For example, it may be the case that a non-AP MLD does not set links with 2 or more AP MLDs to active mode. The roaming mode may be based on fast link activation and deactivation. The operation mode may not be suitable for continuous low delay traffic transmissions, in some embodiments. The AP MAP may limit the affiliated AP MLDs that are capable of operating in roaming mode.

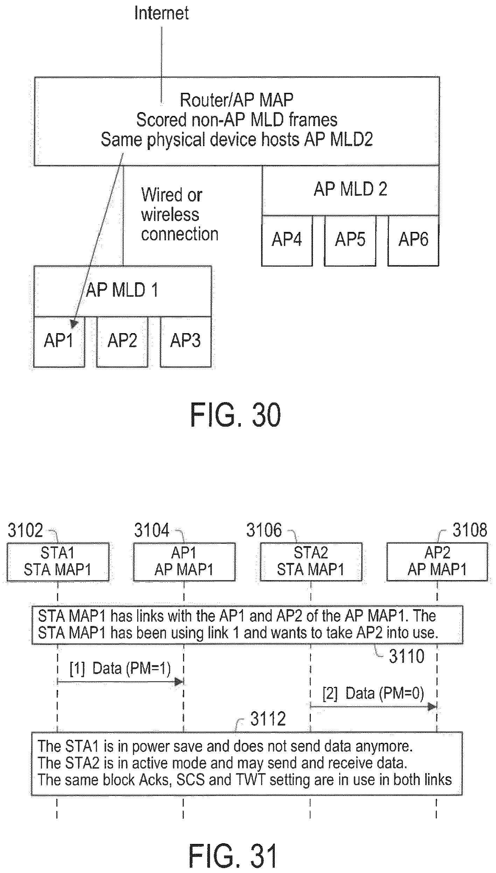

Figures 30-31 illustrate further possible features for AP MAP implementation of the roaming mode, according to some embodiments. As shown in Figure 30, a router / AP MAP may store downlink frames destined to a non-AP MLD in roaming mode. The AP MAP may command the APs to signal whether they have buffered traffic to the non-AP MAP in roaming mode. When a non-AP MAP activates a STA in a link to active mode, the router may forward the buffered frames to the AP. After transmission of the frames, the router may return to buffering frames for the non-AP MAP. As shown in Figure 31, in 3110, a STA MAP1 may have a first link between a STA1 3102 of the STA MAP1 and an AP1 3104 of an AP MAP1 and a second link between a STA2 3106 of the STA MAP1 and an AP2 3108 of the AP MAP1. The STA MAP1 may have been using the first link and may want to instead use the second link (e.g., take AP2 into use). To do so, STA1 3102 may indicate to AP1 3104 to enter power save mode, and STA2 3106 may indicate to AP2 3108 to enter active mode. After this signaling, in 3112, the STA1 3102 may be in power save and may not send any further data, while the STA2 3106 may be in active mode and may send and receive data. Note that the same block acknowledgements, SCS, and TWT settings may be used in both links, at least in some embodiments.

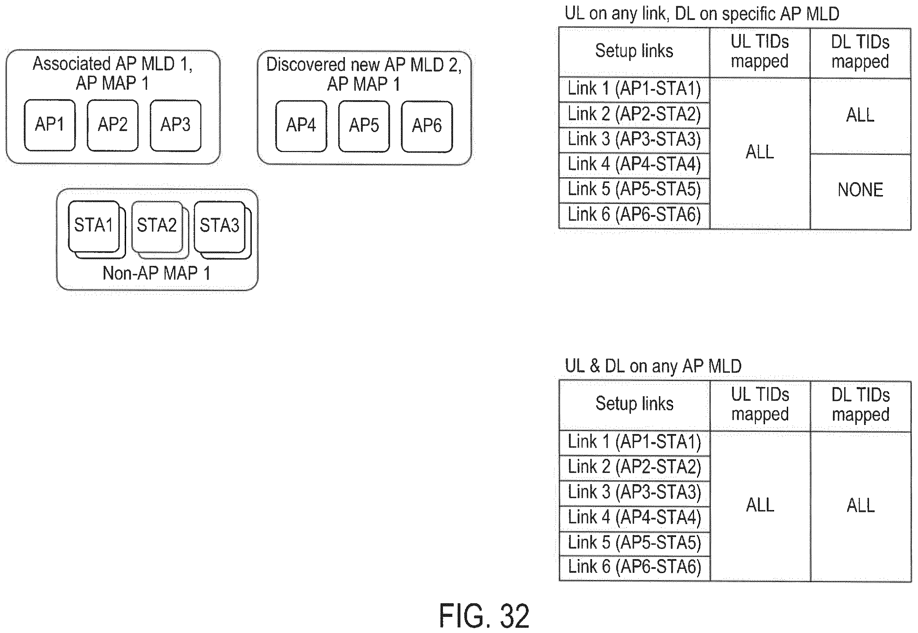

Figure 32 illustrates example aspects of a possible multi-AP operating mode, according to some embodiments. In the illustrated scenario, an AP MAP and non-AP MAP may support more flexible UL and DL transmission modes. Such operating modes may further reduce BSS transition delays within the AP MAP and provide more data transmission alternatives, at least in some instances. As shown, one such possibility may include a scenario in which uplink can be performed on any link (e.g., including those associated with multiple different AP MLDs), while downlink can be performed on a specific AP MLD. In this scenario, UL TIDs may be mapped to all links, including both those links with AP MLD 1 and those links with AP MLD 2, while all DL TIDs may be mapped to those links with AP MLD 1, and no DL TIDs may be mapped to those links with AP MLD 1. As also shown, another such possibility may include a scenario in which uplink and downlink can be performed on any link (e.g., including those associated with multiple different AP MLDs). In this scenario, both UL and DL TIDs may be mapped to all links, including both those links with AP MLD 1 and those links with AP MLD 2.

In some embodiments, a setup link may be defined as enabled if at least one TID is mapped to that link and may be defined as disabled if no TIDs are mapped to that link. If a link is enabled, it may be used for frame exchanges, but may be limited to the data frames corresponding to the mapped TIDs and management fames. Measurement MMPDUs may only be transmitted in a specific link, at least in some embodiments. If a link is disabled, it may be the case that it is not used for frame exchange, including management frame exchange. Power management mode may not be maintained. The S-APSD and TWT schedules may be deleted. Ongoing exchanges that were started before link disablement may transmit response on a disabled link.

It may be the case that a TID is always mapped to at least one setup link, unless admission control is used. TID-to-link mapping may be unidirectional, e.g., such that TIDs mapped to an UL link may not be the same TIDs mapped to the corresponding DL link. By default, it may be the case that all TIDs are mapped to all setup links for both UL and DL; therefore, all setup links may be enabled, in this case. It may be the case that the default TID-to-link mapping mode is used if an AP MLD and a non-AP MLD no not negotiate a different mapping, or an AP MLD and a non-AP MLD cannot agree on any alternative mapping, or an AP MLD and a non-AP MLD have torn down the agreement. TID-to-link mapping negotiation may occur during the ML setup, e.g., via association frames, or via TID-to-link mapping handshakes. Either an AP MLD or a non-AP MLD may be able to initiate the negotiation. Either an AP or a non-AP MLD may accept or reject a TID-to-link mapping request from a peer. If TID-to-link mapping is not accepted, the peer may propose a preferred mapping.

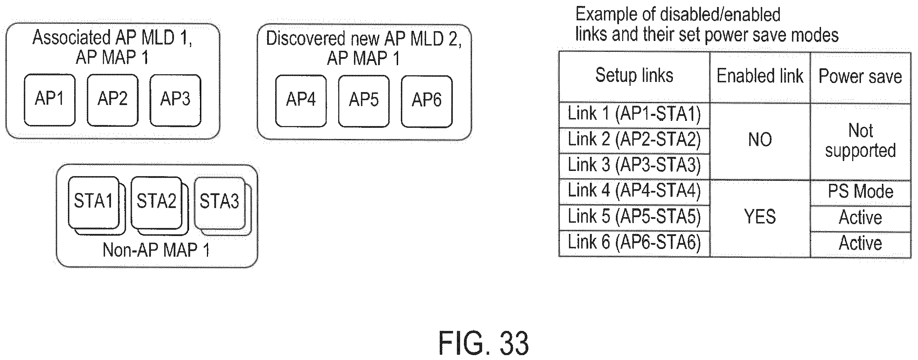

Figure 33 illustrates example aspects of possible power management use in conjunction with a MAP association, according to some embodiments. In the illustrated example, a non-AP MAP may be able to control its power management mode in the enabled links. It may be the case that no traffic is allowed to be sent in disabled links, so a STA cannot set itself to active mode on a disabled link. The power management field in the MAC header may set the STA to active mode or to power save mode. An AP may be expected to not send frames to a STA when it is in power save mode. Note that this operation may be similar to Wi-Fi 7 operation. Thus, in the illustrated scenario, where the non-AP MAP has links 1-3 with AP MLD 1 disabled (and thus with no power save mode option) as well as links 4-6 with AP MLD 2 enabled, the non-AP MAP may set any combination of active and power save modes for the enabled links 4-6, in this case including PS mode for link 4 and active mode for link 5 and link 6.

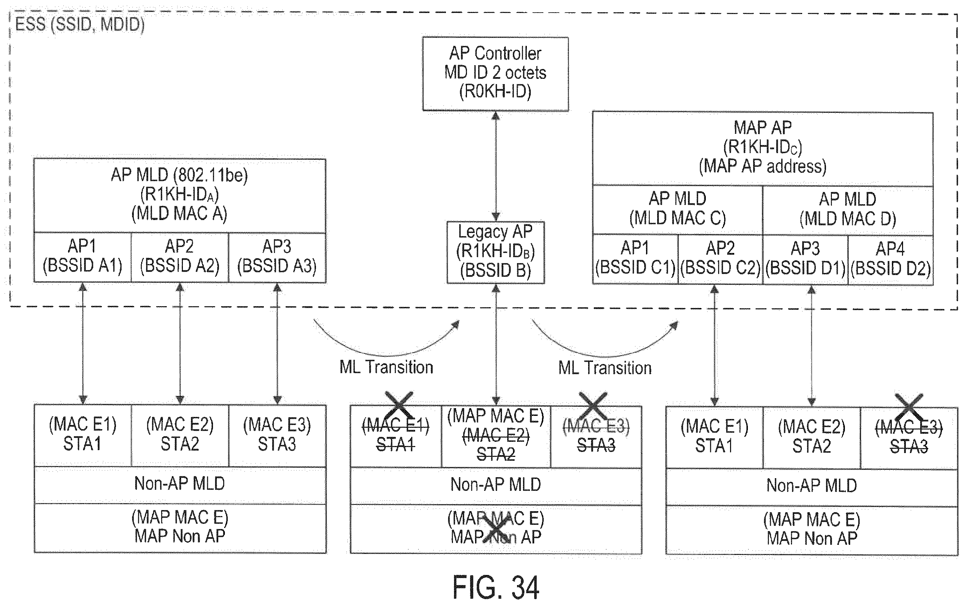

Figure 34 illustrates example aspects of a possible 2-level address hierarchy framework for non-AP STAs in MAP system, according to some embodiments. The 2-level address hierarchy may include a link level address for each link, as well as a STA MAP address to identify the STA. The MAP STA address may be used similarly as a STA MLD address in 802.11be (e.g., in which a STA MLD address may be used to identify a STA in a BSS transition): it may identify the MAP STA to a MAP AP, AP MLD, or AP. As shown, in certain scenarios it may be possible that this address hierarchy is compressed; for example, when interacting with a legacy AP with a single link, it may be the case that the MAP STA address is used to identify the non-AP STA in both the link level and the MAP level. As also shown, the address hierarchy may also re-expand after such compression, for example when transitioning from such a legacy AP to a MAP AP in the MAP system, at least according to some embodiments.

In more detail, at least in some embodiments, the STA link address may be a STA identifier in a link, and may be present in over-the-air (OTA) frames. This address may be changed in association. The non-AP MAP address may identify the non-AP MAP in authentication and association. This address may be a long term identifier and may be used in key derivation. The AP link address may be an AP identifier in a link, and may be present in OTA frames. This address may serve as an AP identifier in legacy authentication and association (noting that legacy association has no multi-link support). The AP MLD address may be an AP MLD identifier in multi-link authentication and association. This address may identify an AP MLD when a non-AP STA MLD associates. The AP MAP address may be an AP MAP identifier in MAP authentication and association. This address may identify an AP MAP when a non-AP STA MAP associates.

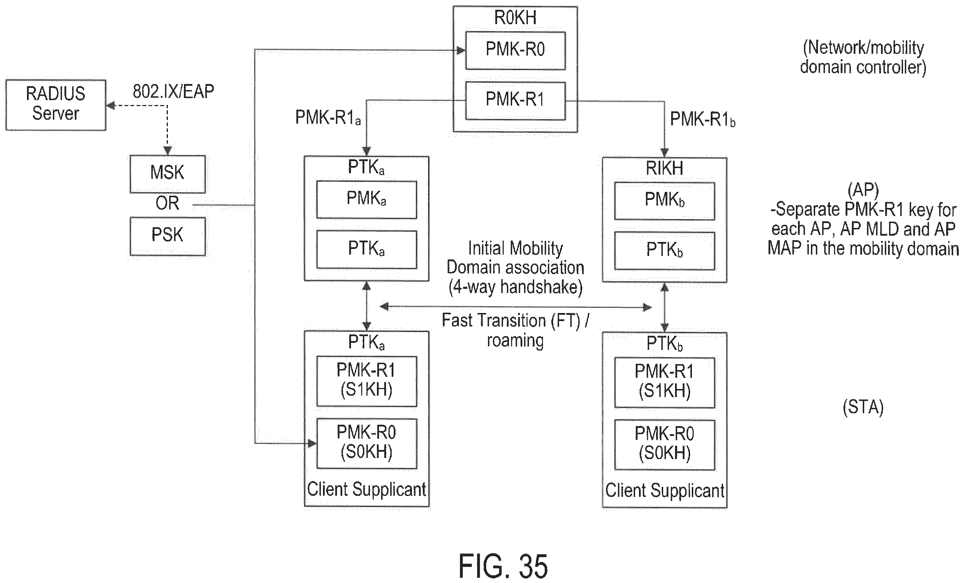

Figure 35 illustrates example aspects of a possible fast transition key hierarchy that could be used in a MAP system, according to some embodiments. As shown, in the illustrated example, a separate PMK-R1 key may be used for each AP, AP MLD, and AP MAP in the mobility domain.

Referring back to Figure 13, example aspects of a possible block acknowledgement (BA) framework that could be used in a MAP system are also illustrated, according to some embodiments. In the illustrated example, the BA may be setup to all links, i.e., all links may have the same BA in use. Each link specific AP may perform link specific data transmission and BA score boarding, e.g., following the Wi-Fi 7 principle. Thus, at least in some ways, BA implementation in a non-AP MAP may be similar to a non-AP MLD implementation. An AP MAP may have multiple alternatives for locating the transmit buffer and reorder buffer.

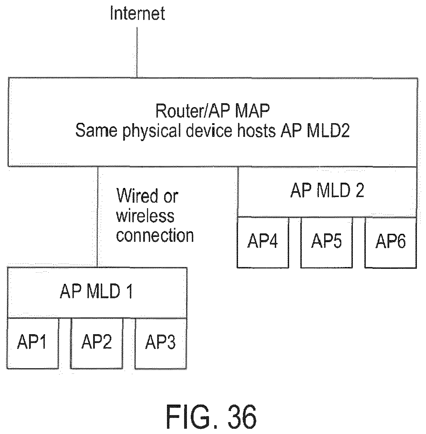

Figure 36 illustrates example aspects of a possible MAP system that includes multiple locations in which transmit buffer and reorder buffer implementation can occur, according to some embodiments. As one option, the DL TX buffer and/or the UL reorder buffer can be located in a router (e.g., AP MAP controller). If this is the DL TX buffer location, a transmitting AP may need to fetch DL frames from the router, which could add delays. If this is the UL reorder buffer location, all UL frames may be forwarded to the router. The router may perform reorder buffering and delete duplicated frames. The router may release the reordered packets to the Internet. As another option, the the DL TX buffer and/or the UL reorder buffer can be located in an AP MLD with active links with a STA. If this is the DL TX buffer location, the DL packets may be delivered directly to the AP MLD. This may reduce DL frame transmission delays. If this is the UL reorder buffer location, a non-AP MAP may send UL frames to a single AP MLD that performs UL reorder buffering. The AP MLD may send the reordered frames immediately to the Internet.

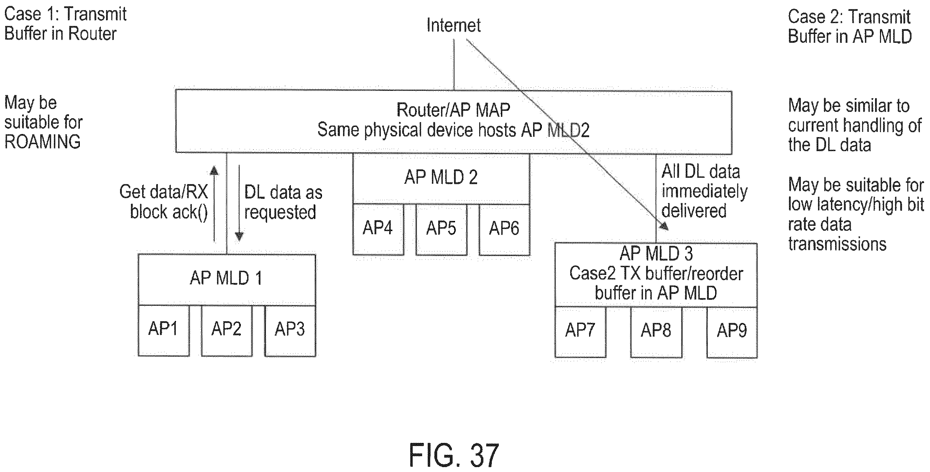

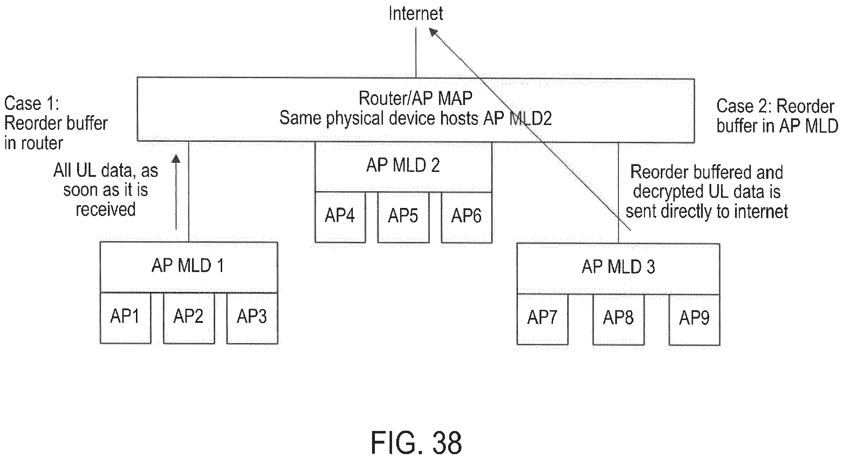

Figures 37-38 illustrate further details of these possible example scenarios. In Figure 37, possible DL frame transmission buffer alternatives in an AP MAP are further illustrated, including a scenario ("Case 1") in which the transmit buffer is located in the router, and a scenario ("Case 2") in which the transmit buffer is located in the AP MLD. In some embodiments, the first scenario may be more suitable for serving a roaming non-AP MAP, which may be receiving downlink data from different MLDs at different times, while the second scenario may be more suitable for low-latency / high bit rate data transmissions, at least in some instances. In Figure 38, possible UL reorder buffer alternatives in an AP MAP are further illustrated, including a scenario ("Case 1") in which the reorder buffer is located in the router, and a scenario ("Case 2") in which the reorder buffer is located in the AP MLD. As shown, in the first scenario, all UL data may be forwarded to the router as soon as it is received, while in the second scenario, reordered buffered and decrypted UL data may be sent from the AP MLD directly to the Internet, at least in some instances.

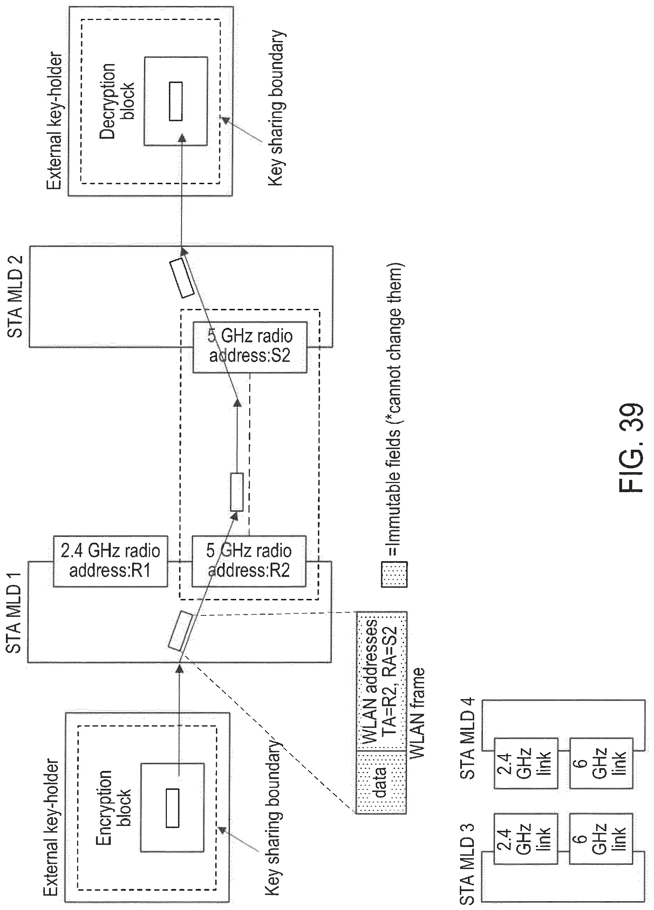

Figure 39 illustrates example aspects of a possible data encryption and decryption architecture in a MAP system, according to some embodiments. In Wi-Fi 7, MLD addresses may be used in data encryption and decryption. The OTA transmitted frames may include the link specific address, such that the MLD address are not transmitted OTA. The MLD address may be used as OTA address in the encryption; the OTA address is set to be the link address, but the receiver replaces the address with the MLD address. Wi-Fi 8 may use a similar principle, with the MLD addresses replaced by the MAP addresses. Encryption/decryption may be performed by a separate block in the cloud, or in the AP MLD. The encryption block may be located with the device that operates the transmission buffer, in some embodiments. Similarly, the decryption block may be located with the device that operates the reordering buffer, in some embodiments.

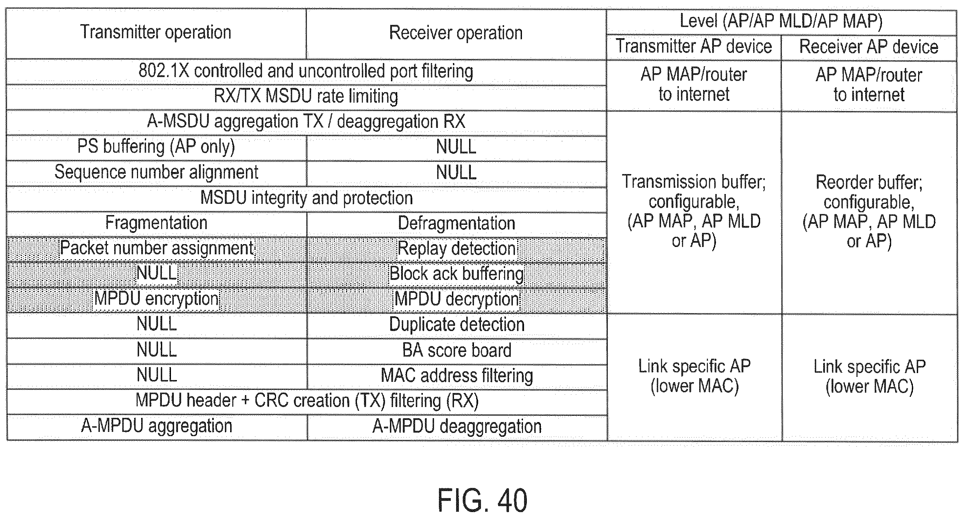

Figure 40 is a table illustrating possible data transmission flow features in an AP MAP and possible implementation locations for those features, according to some embodiments. Note that the packet number assignment and encryption (shaded in the transmitter operations) may be operations of an encryption unit, at least in some embodiments. It may be possible that the decryption and replay detection (shaded in the receiver operations) may be located in an external unit, in some embodiments.

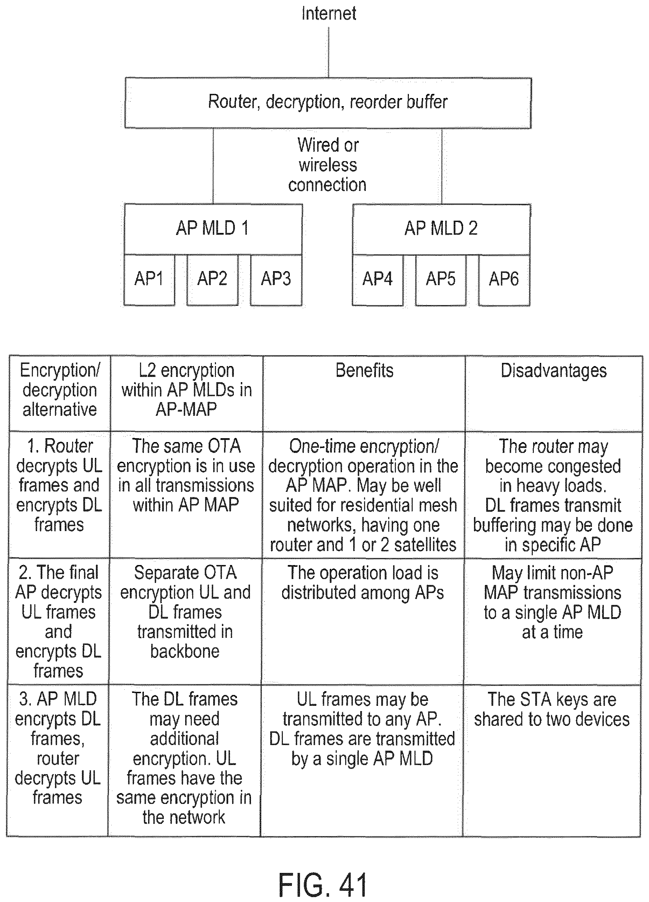

Figure 41 illustrates aspects of possible frame encryption and decryption alternatives in an AP MAP, according to some embodiments. Note that the encryption and decryption alternatives may follow the transmit buffer and reorder buffer implementation alternatives, at least in some instances. As shown, the options may include a first option in which the router decrypts UL frames and encrypts DL frames, a second option in which the final AP MLD decrypts UL frames and encrypts DL frames, and a third (hybrid) option in which the AP MLD encrypts DL frames, while the router decrypts UL frames. Note that other options may also be possible.

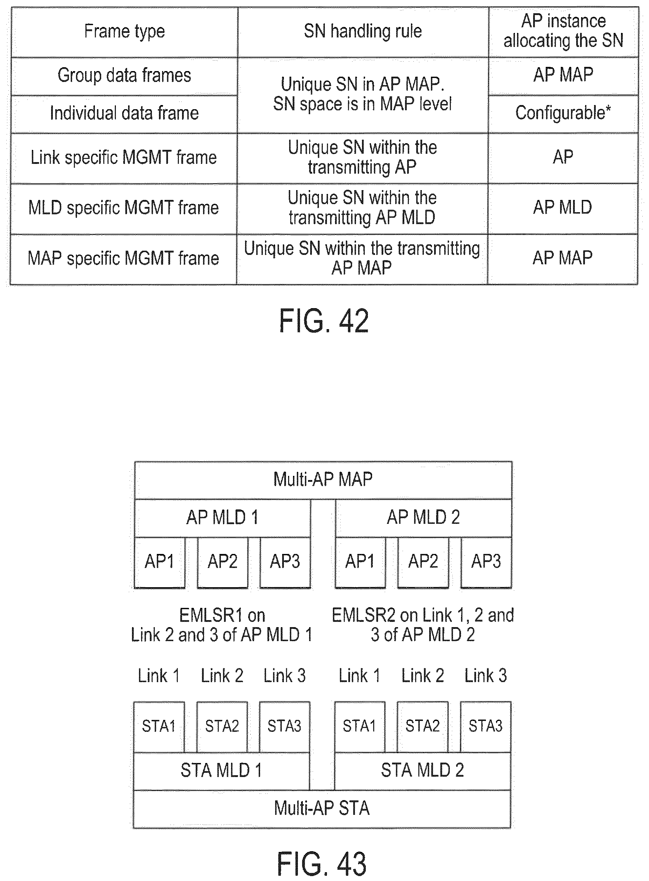

WLAN may have several possible sequence number (SN) spaces. QoS data may have a SN for each TID and direction (UL/DL). AP MAP wide SN may enable BA use in all links. The group addressed data frames may have unique SN within all links. Thus, a non-AP MAP may receive group data frames on any link. Figure 42 is a table illustrating possible sequence number handling rules for such various SN spaces in a MAP system, according to some embodiments.

Figure 43 illustrates example aspects of possible EMLSR operation in MAP association, according to some embodiments. In Wi-Fi 7, EMLSR may be operated in links within an AP MLD. In Wi-Fi 8, it may be the case that EMLSR can be operated in links within one AP MLD. Thus, if an AP MAP has multiple AP MLDs, it may be the case that each AP MLD may setup EMLSR links independently of other AP MLDs. In some embodiments, one EMLSR setup may not operate on links in different AP MLDs. Optionally, it may be the case that Wi-Fi 8 devices can have capability to operate EMLSR in links that belong to different AP MLDs.

Various features may be possible for association maintenance MAP power management, in some embodiments. Such features may include "listen interval" and "max idle period" parameters, which may be exchanged during MAP association, and may both apply to the MAP entity. The listen interval may indicate how often the non-AP MAP wakes at least one of its STAs to receive beacons. The AP MAP may be expected to buffer the unicast Bus for the non-AP MAP for a longer period than the listen interval. The max idle period may indicate a time period during which the AP MAP expects at least one frame from the non-AP MAP on any setup link; otherwise, the AP MAP may disassociate the non-AP MAP. 802.11 specifications may define a MAP max idle value to signal this MAP specific parameter. Alternatively, the legacy BSS max idle variable may signal this idle period. During this time period, it may be the case that the AP MAP will not disassociate the non-AP MAP due to non-received frames from the non-AP MAP on any setup link.

In an AP MAP, all APs may transmit beacons, so a STA may receive a beacon from any AP. A frame from an STA must be received on an enabled link. The network controller or AP MAP may control AP MLDs and check whether the listen interval and/or max idle period are fulfilled for all APs in a MLD.

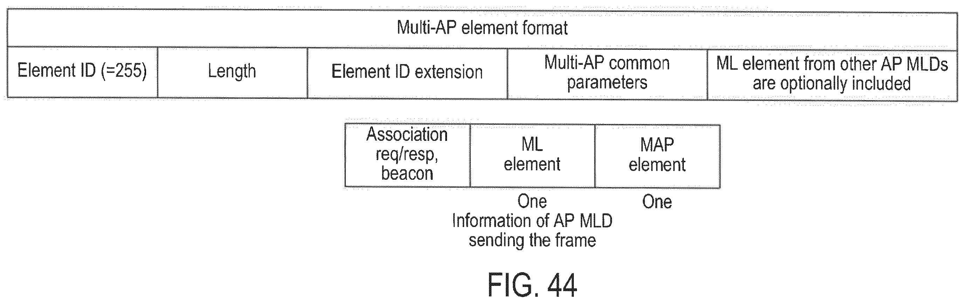

Figure 44 illustrates possible features of a multi-AP element that could be used to provide information about a MAP system, according to some embodiments. The MAP element may include AP MAP common parameters and ML elements of other AP MLD(s) and AP(s) in the AP MAP. The other AP MLD(s) and AP(s) information may be present in association response frame. The MAP element in Beacon and Probe Response frames may only carry common AP MAP parameters, in some embodiments, which may be similar to the Wi-Fi 7 principle of ML element use. A non-AP MLD may transmit a MAP element in an association request frame. The MAP element may include other non-AP MLDs and non-AP(s) parameters for the non-AP MAP of the non-AP MLD. The MAP element may use inheritance: an element value may be inherited from the value of the first element that is transmitted in the frame, at least in some embodiments.

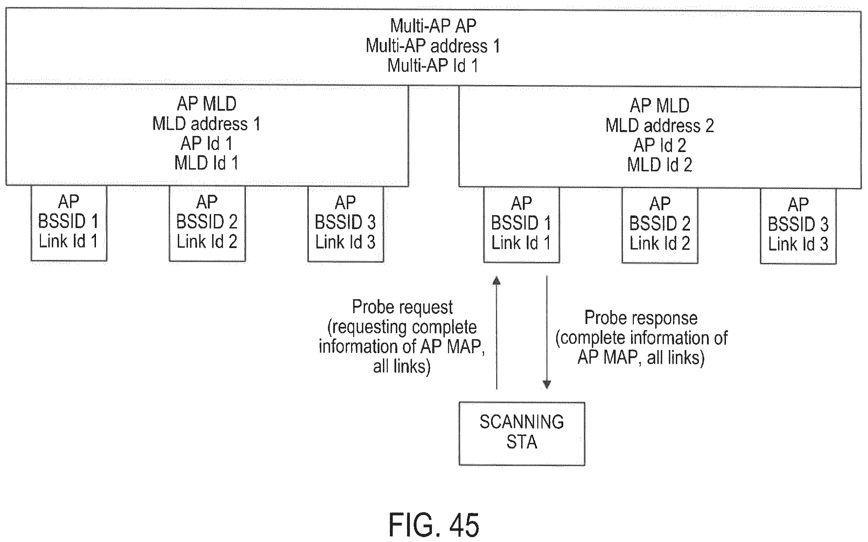

Figure 45 illustrates aspects of a possible MAP probe request and probe response use case, according to some embodiments. A STA may need to have a mechanism to query all links and information for an AP MAP. The STA may need the information to be able to set links with the AP MLD. Thus, a probe request may be provided from a scanning STA to an AP in a MAP system. The query may be specific, e.g., to be able to request information on specific APs. In some embodiments, the AP MAP may be able to provide details of the operated APs and AP MLDs using such a mechanism. At least in some embodiments, this information may be made available before an association request, to facilitate setup of relevant links with correct parameters.

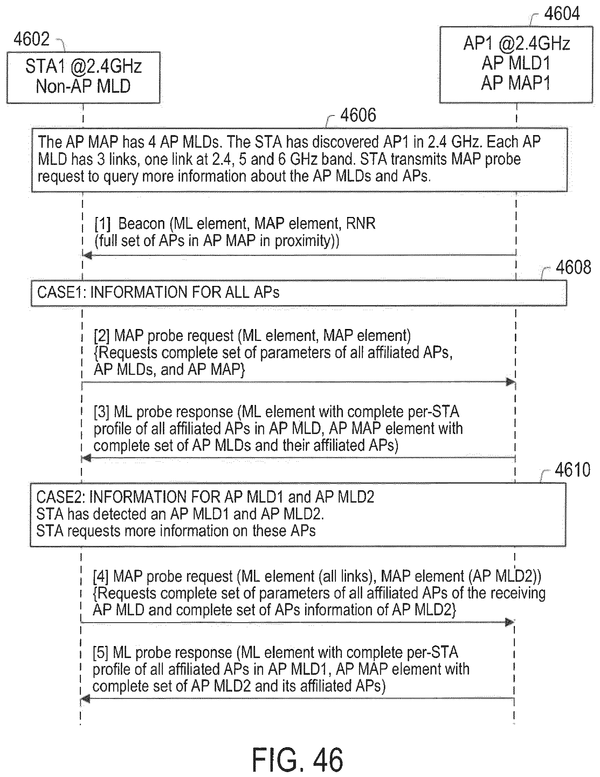

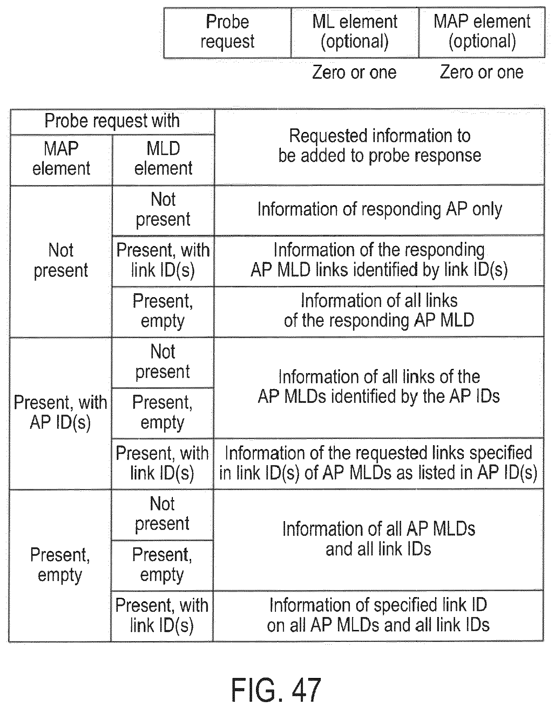

Figure 46 is a signal flow diagram illustrating an example of such a possible MAP probe request and probe response signal flow, according to some embodiments. The signal flow may be performed between a STA1 4602 in a non-AP MLD, which is operating in the 2.4 GHz frequency band, and an AP1 4604 in an AP MLD1 of an AP MAP1, which is also operating in the 2.4 GHz frequency band. In 4606, the AP MAP1 may have 4 AP MLDs. The STA1 4602 may have discovered AP1 4604 in the 2.4 GHz frequency band. Each AP MLD may have 3 links, one link in each of 2.4, 5, and 6 GHz bands. The STA1 4602 may transmit a MAP probe request to query more information about the AP MLDs and APs in the AP MAP. In 4608, a probe request may be provided requesting information for all APs in the AP MAP system, and the probe response may include an AP MAP element with complete information for AP MLDs and their affiliated APs in the system. In 4610, probe request may be provided requesting information for specific AP MLDs in the AP MAP system, and the probe response may include an AP MAP element with information for these specific AP MLDs. Figure 47 is a table illustrating possible variations on information that can be requested/included in probe requests/responses, according to some embodiments.

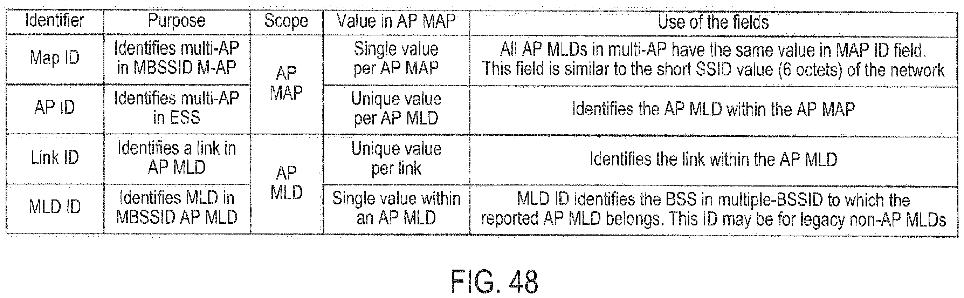

Figure 48 is a table illustrating aspects of possible AP MAP signaling in a reduced neighbor report (RNR), according to some embodiments. The RNR may be used for out-of-the-band discovery of other APs that belong to the same AP MAP, and/or link maintenance to update AP operating parameters, in some instances. A RNR transmitted by an AP affiliated with an AP MAP may include information for the APs in the reporting AP MLD and neighboring AP MLDs that are part of the AP MAP, in some embodiments. As shown, identifier values that may be included in such a RNR may include a MAP ID and one or more AP IDs, link IDs, and/or MLD IDs, at least according to some embodiments.

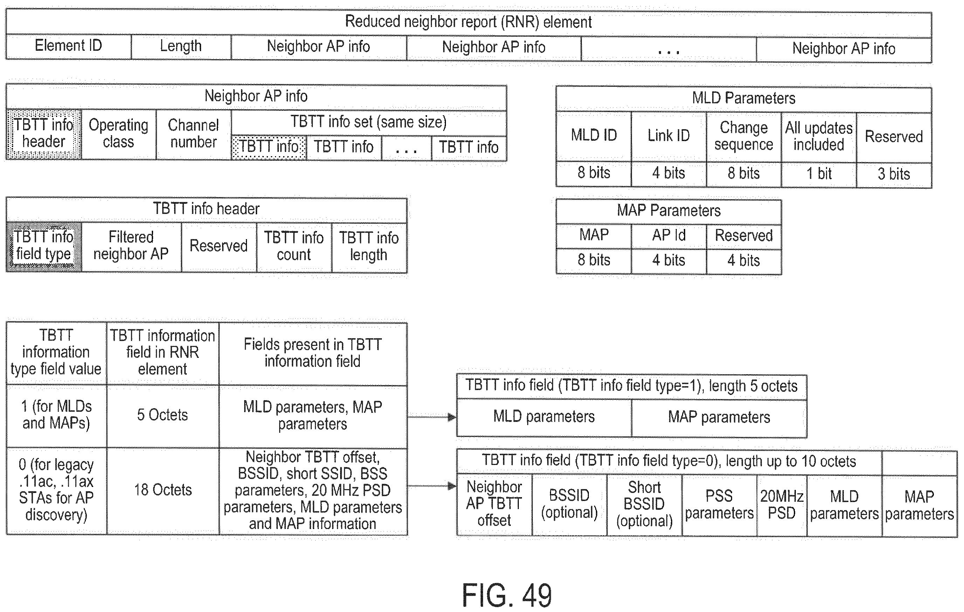

Figures 49-50 illustrate aspects of a possible example RNR format option that could be used in an AP MAP, according to some embodiments. As shown, a RNR element may include neighbor AP info fields for (potentially) multiple neighbor APs. Each neighbor AP information element may include TBTT Info Header, operating class, channel number, and a TBTT info set (which may include multiple TBTT information fields). In some embodiments, the TBTT Info Header may include a TBTT Info Field Type, which may identify whether the TBTT Info Header is for a MLD or MAP STA, or is for a legacy 802.11ac or 802.11ax STA for AP discovery. As shown, the length and fields present in the TBTT Info field may differ depending on the TBTT info field type value.

Note that the MLD ID (e.g., in the MLD parameters field of the TBTT info field) may be generated by the reporting AP to identify the list of reported APs affiliated to a same AP MLD. The link ID may indicate the link identifier of the reported AP within the AP MLD to which the reported AP is affiliated. The change sequence may increment when a critical update to the beacon of the reported AP occurs. The all updates included field may be set to 1 if the beacon transmitted by the reported BSS contains all parameters whose values have changed at the last change sequence value update; thus, by receiving a beacon form the reported BSS, in this case, the STA may get all updated parameter values, at least according to some embodiments.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

In addition to the above-described exemplary embodiments, further embodiments of the present disclosure may be realized in any of various forms. For example, some embodiments may be realized as a computer-implemented method, a computer-readable memory medium, or a computer system. Other embodiments may be realized using one or more custom-designed hardware devices such as ASICs. Still other embodiments may be realized using one or more programmable hardware elements such as FPGAs.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a device (e.g., an AP 104 or a UE 106) may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method, comprising:
by a first access point (AP) wireless device:
providing beacon information indicating one or more multi-AP parameters associated with the first AP wireless device;
receiving beacon information from a second AP wireless device, wherein the beacon information indicates one or more second multi-AP parameters associated with the second AP wireless device; and
establishing a multi-AP system with at least the second AP wireless device based at least in part on the one or more multi-AP parameters associated with the first AP wireless device and the one or more second multi-AP parameters associated with the second AP wireless device.

2. The method of claim 1,
wherein establishing the multi-AP system comprises determining a multi-AP address used to identify the first AP wireless device in the multi-AP system.

3. The method of any of the preceding claims, wherein the method further comprises:
providing multi-AP system information to one or more non-AP wireless devices in one or more of: beacon frames, probe response frames, multi-link probe response frames, or reduced neighbor report frames.

4. The method of any of the preceding claims, wherein the first AP wireless device acts as a network controller for the multi-AP system, wherein the method further comprises:
storing, for each association in the multi-AP system, one or more of:
station (STA) and AP parameters for a link corresponding to the association;
one or more non-AP multi-link device and one or more AP multi-link device parameters for a multi-link device corresponding to the association; or
one or more non-AP multi-access point parameters and one or more AP multi-access point parameters corresponding to the association.

5. The method of claim 4, wherein the method further comprises:
buffering downlink data for one or more non-AP wireless devices in the multi-AP system until the downlink data is requested by an AP wireless device in the multi-AP system;
receiving uplink data for one or more non-AP wireless devices in the multi-AP system from one or more AP wireless devices in the multi-AP system; and
buffering and performing uplink data reordering for the uplink data.

6. The method of claim 4, wherein the method further comprises:
performing one or more of downlink frame encryption or uplink frame decryption for a non-AP wireless device in the multi-AP system.

7. A computer program comprising instructions for performing any of the methods of claims 1-6.

8. An apparatus, comprising:
a processor configured to cause a non-access point (AP) wireless device in a multi-AP system to:
establish a first wireless association with a first AP device in the multi-AP system;
establish a second wireless association with a second AP device in the multi-AP system, wherein the first wireless association and the second wireless association are concurrently active; and
perform wireless data communication with the first AP device and with the second AP device while the first wireless association and the second wireless association are active.

9. The apparatus of claim 8,
wherein the first wireless association and the second wireless association each are established via control signaling with the first AP device.

10. The apparatus of any of claims 8-9, wherein the processor is further configured to cause the non-AP wireless device to:
determine a multi-AP address to be used to identify the non-AP wireless device in the multi-AP system.

11. The apparatus of any of claims 8-10, wherein the processor is further configured to cause the non-AP wireless device to:
receive multi-AP system information, from one or more AP wireless devices, in one or more of: beacon frames, probe response frames, multi-link probe response frames, or reduced neighbor report frames.

12. The apparatus of any of claims 8-11,
wherein unicast frames communicated via the wireless association with the first AP device and unicast frames communicated via the wireless association with the second AP device are encrypted using a same peer-wise transient key (PTK).

13. The apparatus of any of claims 8-12,
wherein at a first time, one or more links corresponding to the first wireless association are enabled and one or more links corresponding to the second wireless association are disabled,
wherein the processor is further configured to cause the non-AP wireless device to, at a second time:
disable one or more links corresponding to the first wireless association; and
enable one or more links corresponding to the second wireless association,
wherein both the first wireless association and the second wireless association are retained at both the first time and the second time.

14. The apparatus of any of claims 8-13, wherein the processor is further configured to cause the non-AP wireless device to:
concurrently enable at least one link for the first wireless association and at least one link for the second wireless association.

15. The apparatus of claim 14, wherein the processor is further configured to cause the non-AP wireless device to:
determine a traffic identifier (TID) to link mapping for the non-AP wireless device for the at least one link for the first wireless association and the at least one link for the second wireless association.
